# EUROPÄISCHE PATENTSCHRIFT

(11) **EP 2 969 114 B1**
(45) Veröffentlichungstag und Bekanntmachung des Hinweises auf die Patenterteilung: **29.04.2020**
(21) Anmeldenummer: 14708009.7
(22) Anmeldetag: 04.03.2014
(51) Int. Cl.: B01D 46/00

(54) **FILTERVORRICHTUNG UND LACKIERANLAGE**
FILTER DEVICE AND A PAINTING INSTALLATION
DISPOSITIF DE FILTRATION ET INSTALLATION DE PEINTURE

(30) Priorität: 11.03.2013 DE 102013204169
(43) Veröffentlichungstag der Anmeldung: 20.01.2016
(73) Patentinhaber: Dürr Systems AG, 74321 Bietigheim-Bissingen (DE)
(72) Erfinder: KNÜSEL, Christof, 80799 München (DE); SCHEERER, Jan, 70435 Stuttgart (DE)
(74) Vertreter: Hoeger, Stellrecht & Partner Patentanwälte mbB
(86) Internationale Anmeldenummer: PCT/EP2014/054144
(87) Internationale Veröffentlichungsnummer: WO 2014/139833

(56) Entgegenhaltungen:
- EP-A1- 2 527 025
- AT-B- 262 460
- DE-A1-102007 040 901
- US-A- 6 146 433
- US-A1- 2009 020 011

## Beschreibung

Die vorliegende Erfindung betrifft eine Filtervorrichtung zum Abtrennen von Partikeln, insbesondere von Partikeln eines Beschichtungsmaterials, aus einem Partikel enthaltenden Rohgasstrom. Die Filtervorrichtung umfasst eine Einhausung und mindestens ein Filterelement. Die Einhausung begrenzt einen Innenraum der Filtervorrichtung, in welchem das mindestens eine Filterelement angeordnet ist. Bei dieser Filtervorrichtung ist der Rohgasstrom durch einen Einlassabschnitt der Filtervorrichtung in einer Einströmrichtung dem Innenraum der Filtervorrichtung zuführbar.

Eine solche Filtervorrichtung ist beispielsweise aus der DE 10 2007 040 901 A1, der EP 2 527 025 A1, der AT 262 460 B oder der US 6,146,433 A bekannt.

Der vorliegenden Erfindung liegt die Aufgabe zugrunde, eine Filtervorrichtung der eingangs genannten Art bereitzustellen, bei welcher der Innenraum effizienter durchströmbar und somit die Filtervorrichtung zuverlässiger und sicherer betreibbar ist.

Diese Aufgabe wird erfindungsgemäß durch eine Filtervorrichtung gemäß Anspruch 1 gelöst.

Unter einer Filtervorrichtung ist in dieser Beschreibung und den beigefügten Ansprüchen ganz allgemein eine Vorrichtung zum Abtrennen von Partikeln aus einem Partikel enthaltenden Rohgasstrom zu verstehen, insbesondere eine Vorrichtung, bei welcher die Partikel mittels Trockenabscheidung, Nassauswaschung, Elektrofilter, etc. aus dem Partikel enthaltenden Rohgasstrom entfernbar sind.

Der Einlassabschnitt der Filtervorrichtung ist vorzugsweise eine Öffnung in einer Wandung der Einhausung, insbesondere eine Ausnehmung oder Aussparung in einem Wandelement der Einhausung.

Mittels des mindestens einen Blendenelements ist auf einer dem Innenraum zugewandten Seite des mindestens einen Blendenelements ein Rückstrombereich und/oder ein Querstrombereich des Rohgasstroms erzeugbar. In einem Rückstrombereich und/oder einem Querstrombereich des Rohgasstroms ist die Strömungsrichtung des Rohgasstroms vorzugsweise entgegengesetzt oder quer zur Einströmrichtung des Rohgasstroms ausgerichtet.

Vorteilhaft kann es sein, wenn sich der Einlassabschnitt zumindest näherungsweise über eine gesamte Breite oder eine gesamte Länge der Einhausung erstreckt. Auf diese Weise kann ein großer Volumenstrom in den Innenraum der Filtervorrichtung eingeleitet werden. Insbesondere kann hierdurch eine gleichmäßige Zuführung des Rohgasstroms zu dem Innenraum der Filtervorrichtung erfolgen.

Erfindungsgemäß ist vorgesehen, dass mindestens ein Blendenelement beim Einströmen des Rohgasstroms in den Innenraum der Filtervorrichtung mindestens zweiseitig von dem Rohgasstrom umströmbar ist.

Mindestens ein Blendenelement bildet einen Steg, welcher sich von einer Seite des Einlassabschnitts bis zu einer dieser Seite gegenüberliegenden Seite des Einlassabschnitts erstreckt.

Ferner kann vorgesehen sein, dass mindestens ein weiteres Blendenelement dreiseitig von dem Rohgasstrom umströmbar ist. Insbesondere kann hierbei vorgesehen sein, dass mindestens ein Blendenelement in den Einlassabschnitt hineinragt, sich jedoch vorzugsweise nicht bis zur gegenüberliegenden Seite erstreckt.

Insbesondere kann vorgesehen sein, dass mindestens ein Blendenelement eine dem Innenraum der Filtervorrichtung abgewandte Vorderseite umfasst, welche von dem Rohgasstrom angeströmt wird. Vorzugsweise umfasst mindestens ein Blendenelement eine dem Innenraum der Filtervorrichtung zugewandte Rückseite, sowie die Vorderseite und die Rückseite miteinander verbindende Seitenflächen.

Unter einem mindestens zweiseitigen Umströmen ist in dieser Beschreibung und den beigefügten Ansprüchen insbesondere ein Entlangströmen des Rohgasstroms längs mindestens zweier einander gegenüberliegender Seiten, insbesondere längs mindestens zweier Seitenflächen, des mindestens einen Blendenelements zu verstehen.

Günstig kann es sein, wenn die Blendenvorrichtung mehrere Blendenelemente umfasst, welche regelmäßig verteilt angeordnet sind, so dass der Einlassabschnitt mittels der Blendenelemente in einem regelmäßigen Muster abschnittsweise abdeckbar ist.

Alternativ oder ergänzend hierzu kann vorgesehen sein, dass die Blendenvorrichtung mehrere Blendenelemente umfasst, welche unregelmäßig verteilt angeordnet sind, so dass der Einlassabschnitt mittels der Blendenelemente in einem unregelmäßigen Muster abschnittsweise abdeckbar ist.

Es kann vorgesehen sein, dass eines oder mehrere Blendenelemente bewegbar an einem Aufnahmeelement der Blendenvorrichtung angeordnet sind.

Insbesondere kann vorgesehen sein, dass eines oder mehrere Blendenelemente motorisch bewegbar an einem Aufnahmeelement der Blendenvorrichtung angeordnet sind.

Insbesondere kann vorgesehen sein, dass mindestens ein Blendenelement drehbar, insbesondere um eine vertikale Achse oder um eine horizontale Achse drehbar, und/oder verschiebbar, insbesondere linear verschiebbar, an einem Aufnahmeelement der Blendenvorrichtung angeordnet ist.

Das Aufnahmeelement der Blendenvorrichtung kann beispielsweise als ein Rahmenelement ausgebildet sein.

Insbesondere kann vorgesehen sein, dass das Aufnahmeelement, insbesondere das Rahmenelement, eine Umrandung des Einlassabschnitts der Filtervorrichtung bildet oder an einer Umrandung des Einlassabschnitts der Filtervorrichtung angeordnet ist.

Mindestens ein Blendenelement erstreckt sich von einer bezüglich der Schwerkraftrichtung oberen Seite des Einlassabschnitts bis zu einer bezüglich der Schwerkraftrichtung unteren Seite des Einlassabschnitts.

Der Einlassabschnitt wird somit mittels des mindestens einen Blendenelements geteilt. Insbesondere können hierdurch mindestens zwei Einlassöffnungen des Einlassabschnitts gebildet werden.

Die mindestens zwei Einlassöffnungen sind dabei mittels des mindestens einen Blendenelements voneinander getrennt und somit voneinander beabstandet angeordnet.

Insbesondere kann vorgesehen sein, dass die Blendenvorrichtung mehrere flache, ebene und/oder flügelförmige Blendenelemente umfasst.

Vorzugsweise sind die Blendenelemente bezüglich der Schwerkraftrichtung nebeneinander angeordnet.

Mindestens ein Blendenelement ist vorzugsweise im Wesentlichen plattenförmig ausgebildet.

Unter einem im Wesentlichen plattenförmigen Blendenelement ist in dieser Beschreibung und den beigefügten Ansprüchen insbesondere ein im Wesentlichen quaderförmiges Blendenelement zu verstehen, welches zwei im Wesentlichen parallel zueinander ausgerichtete Seiten umfasst, welche eine große Fläche aufweisen und in geringem Abstand voneinander angeordnet sind, wobei die diese Seiten miteinander verbindenden Seiten eine relativ kleine Fläche aufweisen und in großem Abstand voneinander angeordnet sind.

Vorzugsweise sind die zwei parallelen Seiten, welche eine große Fläche aufweisen und in geringem Abstand voneinander angeordnet sind, die Frontseite und die Rückseite des Blendenelements, d.h. die dem Innenraum der Einhausung abgewandte bzw. dem Innenraum der Einhausung zugewandte Seite des Blendenelements.

Es kann jedoch auch vorgesehen sein, dass die zwei parallelen Seiten, welche eine große Fläche aufweisen und in geringem Abstand voneinander angeordnet sind, diejenigen Seiten sind, längs welchen der Rohgasstrom in der Einströmrichtung an dem Blendenelement vorbeiströmt. Das Blendenelement ist dann insbesondere ein Strömungselement, mittels welchem die Strömungsrichtung des Rohgasstroms beeinflussbar, insbesondere ablenkbar oder umlenkbar, ist.

Es kann vorgesehen sein, dass mindestens ein Blendenelement gebogen ausgebildet ist, insbesondere zumindest näherungsweise flügelförmig ausgebildet ist. Auf diese Weise kann eine Umströmung des Blendenelements mit dem Rohgasstrom und/oder eine Strömungsrichtung des Rohgasstroms gezielt beeinflusst werden.

Mindestens ein Blendenelement weist vorzugsweise einen längs einer Einströmrichtung des Rohgasstroms variierenden Querschnitt auf.

Insbesondere kann vorgesehen sein, dass mindestens ein Blendenelement eine sich zumindest abschnittsweise längs der Einströmrichtung des Rohgasstroms vergrößernde Querschnittsfläche aufweist.

Alternativ oder ergänzend hierzu kann vorgesehen sein, dass mindestens ein Blendenelement eine sich zumindest abschnittsweise längs einer Einströmrichtung des Rohgasstroms verkleinernde Querschnittsfläche aufweist.

Günstig kann es sein, wenn die eingangs genannte Filtervorrichtung mindestens ein Strömungselement einer Strömungsführung zur Beeinflussung einer Strömungsrichtung des Rohgasstroms umfasst.

Eine solche Filtervorrichtung weist vorzugsweise ferner einzelne oder mehrere der im Zusammenhang mit den weiteren Filtervorrichtungen beschriebenen Merkmale und/oder Vorteile auf.

Es kann vorgesehen sein, dass die Blendenvorrichtung eine Strömungsführung bildet. Vorzugsweise ist jedoch vorgesehen, dass mittels der Blendenvorrichtung der Rohgasstrom abschnittsweise blockierbar ist, während mittels einer von der Blendenvorrichtung verschiedenen Strömungsführung die Strömungsrichtung des Rohgasstroms gezielt beeinflussbar, insbesondere ablenkbar oder umlenkbar, ist.

Mindestens ein Strömungselement der Strömungsführung ist vorzugsweise mindestens zweiseitig von dem Rohgasstrom umströmbar.

Mindestens ein Strömungselement ist vorzugsweise als ein Strömungsablenkelement und/oder als ein Strömungsumlenkelement ausgebildet. Insbesondere kann mittels mindestens eines Strömungselements eine Strömungsrichtung des Rohgasstroms unter Erhalt einer im Wesentlichen laminaren Strömung beeinflusst werden.

Günstig kann es sein, wenn mindestens ein Strömungselement in einem dem Einlassabschnitt zugeordneten Einlasskanal der Filtervorrichtung angeordnet ist.

Der Einlasskanal schließt sich beispielsweise bezüglich der Einströmrichtung des Rohgasstroms stromaufwärts oder stromabwärts an den Einlassabschnitt an oder ist mittels des Einlassabschnitts gebildet.

Mindestens ein Strömungselement ist vorzugsweise bewegbar ausgebildet und/oder bewegbar angeordnet.

Insbesondere kann vorgesehen sein, dass mindestens ein Strömungselement motorisch bewegbar, insbesondere drehbar und/oder verschiebbar, beispielsweise linear verschiebbar, ausgebildet und/oder angeordnet ist.

Mindestens ein Strömungselement ist vorzugsweise ein variables Strömungselement, welches insbesondere automatisch an unterschiedliche Strömungszustände im Betrieb der Filtervorrichtung anpassbar ist.

Es kann vorgesehen sein, dass mindestens ein Strömungselement bauartbedingt, insbesondere aufgrund seines Eigengewichts, selbsttätig an einen in den Innenraum der Einhausung der Filtervorrichtung einströmenden Rohgasvolumenstrom anpassbar ist. Insbesondere kann eine Masse des mindestens einen Strömungselements dabei so gewählt werden, dass durch einen variierenden Rohgasstrom, insbesondere einen variierenden Rohgasvolumenstrom, automatisch eine variierende Öffnung des Einlassabschnitts erhältlich ist.

Bei einer Ausgestaltung der Erfindung ist vorgesehen, dass die Filtervorrichtung eine Blendenvorrichtung umfasst, welche mindestens ein Blendenelement umfasst, wobei mittels des mindestens einen Blendenelements der Einlassabschnitt abschnittsweise abdeckbar ist, so dass mindestens eine Einlassöffnung und mindestens ein abgedeckter Blendenabschnitt gebildet sind.

Vorteilhaft kann es sein, wenn mindestens ein Strömungselement bezüglich der Einströmrichtung des Rohgasstroms stromabwärts einer Einlassöffnung angeordnet ist.

Es kann vorgesehen sein, dass der Rohgasstrom mittels des mindestens einen Strömungselements, welches bezüglich der Einströmrichtung des Rohgasstroms stromabwärts einer Einlassöffnung angeordnet ist, bezüglich der Schwerkraftrichtung nach unten ablenkbar ist. Insbesondere kann der Rohgasstrom hierdurch einem Aufnahmebehälter für Filterhilfsmaterial zugeführt werden.

Der Rohgasstrom ist vorzugsweise in einem bezüglich der Einströmrichtung des Rohgasstroms stromabwärts eines Blendenabschnitts angeordneten Bereich des Innenraums quer zur Einströmrichtung und/oder entgegen der Schwerkraftrichtung nach oben führbar. Insbesondere kann vorgesehen sein, dass der Rohgasstrom in einem bezüglich der Einströmrichtung des Rohgasstroms direkt stromabwärts des Blendenabschnitts angeordneten Bereich des Innenraums, beispielsweise längs des mindestens einen Blendenelements, quer zur Einströmrichtung und/oder entgegen der Schwerkraftrichtung nach oben führbar ist.

Die Einlassöffnung oder die Einlassöffnungen können grundsätzlich jede beliebige Form aufweisen. Vorzugsweise sind eine oder mehrere Einlassöffnungen viereckig, rechteckig, quadratisch, parallelogrammförmig, dreieckig oder rund ausgebildet.

Bei der eingangs genannten Filtervorrichtung kann bei einer Ausgestaltung der Erfindung vorgesehen sein, dass mittels mindestens eines Filterelements und einer Wandung der Einhausung ein Zuführkanal gebildet ist, durch welchen der Rohgasstrom dem mindestens einen Filterelement zuführbar ist.

Eine solche Filtervorrichtung weist vorzugweise einzelne oder mehrere Merkmale und/oder Vorteile der weiteren beschriebenen Filtervorrichtungen auf.

Es kann vorgesehen sein, dass der Zuführkanal sich an einen Einströmbereich des Innenraums der Einhausung anschließt.

Vorzugsweise ist ein Einströmbereich derjenige Bereich des Innenraums, in welchem sich im Betrieb der Filtervorrichtung eine von Bauteilen der Filtervorrichtung im Wesentlichen unbeeinflusste Wirbelströmung ausbilden kann.

Insbesondere kann vorgesehen sein, dass der Einströmbereich ein Innenraum eines beispielsweise im Wesentlichen trichterförmigen Aufnahmebehälters zur Aufnahme von Filterhilfsmaterial ist.

Es kann vorgesehen sein, dass die Filtervorrichtung mehrere Zuführkanäle umfasst.

Mindestens ein Zuführkanal erstreckt sich vorzugsweise ausgehend von einer Unterseite mindestens eines Filterelements entgegen der Schwerkraftrichtung nach oben.

Mindestens ein Zuführkanal ist vorzugsweise bezüglich der Schwerkraftrichtung seitlich neben dem mindestens einen Filterelement angeordnet.

Insbesondere kann vorgesehen sein, dass mindestens ein Zuführkanal sich längs einer ersten Wandung der Einhausung bis zu einer beispielsweise im Wesentlichen senkrecht zu der ersten Wandung ausgerichteten zweiten Wandung der Einhausung erstreckt.

Vorteilhaft kann es sein, wenn die Filtervorrichtung eines oder mehrere in dem Zuführkanal angeordnete Strömungselemente umfasst.

Mittels des einen oder der mehreren Strömungselemente ist der Rohgasstrom vorzugsweise in Richtung des mindestens einen Filterelements umlenkbar. Insbesondere kann mittels des mindestens einen Strömungselements der Rohgasstrom gezielt an einzelnen Stellen und/oder gleichmäßig dem mindestens einen Filterelement zugeführt werden.

Es kann vorgesehen sein, dass der Zuführkanal mindestens dreiseitig von Wandungen der Einhausung begrenzt ist. Der Zuführkanal erstreckt sich dabei vorzugsweise über eine gesamte Breite oder eine gesamte Länge der Einhausung.

Bei einer Ausgestaltung der Erfindung ist vorgesehen, dass der Zuführkanal auf einer dem Einlassabschnitt abgewandten Seite des Innenraums der Einhausung angeordnet ist.

Insbesondere kann vorgesehen sein, dass eine dem Einlassabschnitt gegenüberliegende Wandung der Einhausung den Zuführkanal begrenzt.

Alternativ oder ergänzend hierzu kann vorgesehen sein, dass mindestens ein Zuführkanal bezüglich einer Einströmrichtung des Rohgasstroms seitlich benachbart zu mindestens einem Filterelement angeordnet ist und somit mindestens eine zumindest näherungsweise parallel zur Einströmrichtung ausgerichtete Wandung der Einhausung den mindestens einen Zuführkanal begrenzt.

Bei der eingangs genannten Filtervorrichtung kann bei einer Ausgestaltung der Erfindung vorgesehen sein, dass die Filtervorrichtung eine Strömungsführung umfasst, welche eines oder mehrere Strömungselemente umfasst, wobei das eine oder die mehreren Strömungselemente wenigstens abschnittsweise von dem Rohgasstrom umströmbar angeordnet sind.

Eine solche Filtervorrichtung kann vorzugsweise ferner einzelne oder mehrere der im Zusammenhang mit den weiteren beschriebenen Filtervorrichtungen genannten Merkmale und/oder Vorteile aufweisen.

Die erfindungsgemäße Filtervorrichtung eignet sich insbesondere zur Verwendung in einer Lackieranlage.

Die vorliegende Erfindung betrifft daher auch eine Lackieranlage, welche mindestens eine erfindungsgemäße Filtervorrichtung umfasst.

Die erfindungsgemäße Lackieranlage weist vorzugsweise einzelne oder mehrere Merkmale und/oder Vorteile der erfindungsgemäßen Filtervorrichtung auf.

Die erfindungsgemäße Lackieranlage umfasst vorzugsweise eine Lackierkabine, in welcher Werkstücke, insbesondere Fahrzeugkarosserien, lackierbar sind, und eine unter oder neben der Lackierkabine angeordnete Filteranlage.

Die Filteranlage umfasst dabei eine oder mehrere der erfindungsgemäßen Filtervorrichtungen.

Im Betrieb der Lackieranlage wird Luft durch die Lackierkabine hindurchgeführt. Diese Luft nimmt dabei Partikel, insbesondere Lack-Overspray-Partikel, auf und wird zur Reinigung derselben als Partikel enthaltender Rohgasstrom der Filteranlage, insbesondere den Filterelementen, zugeführt.

Die Filteranlage umfasst vorzugsweise einen, insbesondere bezüglich einer vertikalen Längsmittelachse der Lackieranlage mittig angeordneten, Rohgasschacht, durch welchen der Rohgasstrom aus der Lackierkabine einer oder mehreren Filtervorrichtungen zuführbar ist.

Es kann vorgesehen sein, dass der Rohgasstrom einseitig aus dem Rohgasschacht abgeführt und einer oder mehreren Filtervorrichtungen zugeführt wird.

Alternativ hierzu kann jedoch auch vorgesehen sein, dass zu beiden Seiten des Rohgasschachts jeweils mindestens eine Filtervorrichtung angeordnet ist und somit der Rohgasstrom beidseitig aus dem Rohgasschacht abgeführt und den Filtervorrichtungen zugeführt wird.

Grundsätzlich kann jedoch auch eine seitlich neben der Lackierkabine angeordnete Filteranlage vorgesehen sein. Hierbei kann der Rohgasstrom in horizontaler Richtung aus der Lackierkabine der Filteranlage zugeführt werden. Diese Variante kann bei vertikal durchströmten und beispielsweise auch bei horizontal durchströmten Lackierkabinen eingesetzt werden.

Die erfindungsgemäße Filtervorrichtung und/oder die erfindungsgemäße Lackieranlage eignet sich insbesondere zum Abtrennen von Partikeln aus einem Partikel enthaltenden Rohgasstrom.

Die vorliegende Erfindung betrifft daher auch ein Verfahren zum Abtrennen von Partikeln, insbesondere von Partikeln eines Beschichtungsmaterials, aus einem Partikel enthaltenden Rohgasstrom.

Der Erfindung liegt diesbezüglich die Aufgabe zugrunde, ein Verfahren bereitzustellen, mittels welchem Partikel zuverlässig und sicher aus einem Rohgasstrom abtrennbar sind.

Diese Aufgabe wird erfindungsgemäß durch ein Verfahren gemäß Anspruch 10 gelöst.

Das erfindungsgemäße Verfahren weist vorzugsweise einzelne oder mehrere der im Zusammenhang mit der erfindungsgemäßen Filtervorrichtung und/oder der erfindungsgemäßen Lackieranlage beschriebenen Merkmale und/oder Vorteile auf.

Bezüglich einer Einströmrichtung des Rohgasstroms in den Innenraum der Filtervorrichtung stromabwärts eines Blendenelements der Blendenvorrichtung wird eine Rückströmung und/oder Querströmung von Rohgas entgegen der Einströmrichtung und/oder quer zur Einströmrichtung des Rohgasstroms erzeugt.

Insbesondere kann vorgesehen sein, dass in einer Hauptrichtung des Rohgasstroms gesehen hinter dem Blendenelement der Blendenvorrichtung eine Rückströmung und/oder Querströmung von Rohgas entgegen der Hauptrichtung des Rohgasstroms und/oder quer zur Hauptrichtung des Rohgasstroms erzeugt wird.

Ferner können die erfindungsgemäße Filtervorrichtung und/oder die erfindungsgemäße Lackieranlage einzelne oder mehrere der nachfolgend beschriebenen Merkmale und/oder Vorteile aufweisen:
Eine Filtervorrichtung ist vorzugsweise eine regenerierbare Filtervorrichtung.

Unter einer regenerierbaren Filtervorrichtung ist eine Abtrennvorrichtung zum Abtrennen von Verunreinigungen aus einem Rohgasstrom, beispielsweise zum Abtrennen von Verunreinigungen aus einem durch eine Lackiervorrichtung geführten Gasstrom, insbesondere zum Abtrennen von Lack-Overspray aus einem Lack-Overspray enthaltenden Rohgasstrom, zu verstehen, bei welcher abgeschiedene Verunreinigungen abgereinigt werden können, ohne Filterelemente der Filtervorrichtung austauschen zu müssen.

Unter einer regenerierbaren Filtervorrichtung ist insbesondere auch eine Filtervorrichtung zu verstehen, die eines oder mehrere Trockenfilterelemente und/oder Trockenabscheidungsvorrichtungen aufweist, bei denen eine Reinigung eines Gasstroms im Wesentlichen ohne die Zugabe einer Flüssigkeit an den Filterelementen erfolgt. Davon unabhängig können nachfolgende oder vorgelagerte Reinigungsstufen wiederum unter Verwendung von (bei Normalbedingungen) flüssigen Löse- oder Reinigungsmitteln vorgesehen sein.

Bei einer regenerierbaren Filtervorrichtung kann ferner vorgesehen sein, dass die Filtervorrichtung mindestens ein Filterelement umfasst, welches im Filterbetrieb mit einer Sperrschicht und/oder einer Schutzschicht versehen ist, welche Filterhilfsmaterial, insbesondere Kalksteinmehl, umfasst.

Auf diese Weise kann im Filterbetrieb der Filtervorrichtung verhindert werden, dass sich das Filterelement mit Verunreinigungen aus dem der Filtervorrichtung zugeführten Gasstrom zusetzt. Durch eine Abreinigung der Sperrschicht bzw. Schutzschicht von dem Filterelement der Filtervorrichtung kann eine besonders einfache Regeneration des Filterelements erfolgen, welches anschließend durch Aufbringen einer frischen Sperrschicht bzw. einer frischen Schutzschicht erneut verwendbar ist.

Verunreinigungen sind beispielsweise Partikel, insbesondere Partikel eines Beschichtungsmaterials. Der Begriff "Partikel" umfasst dabei insbesondere Tröpfchen, Konglomerate, Agglomerate, Körner, Kristalle, etc., welche in Reinform oder verunreinigt vorliegen können.

Partikel können beispielsweise Lack-Overspray-Partikel sein.

Als Lack kommt insbesondere Pulverlack oder Fluidlack in Betracht.

Mit dem Begriff "Fluidlack" wird dabei - im Unterschied zum Begriff "Pulverlack" - ein Lack mit einer fließfähigen Konsistenz, von flüssig bis pastös (beispielsweise im Falle eines PVC-Plastisols), bezeichnet. Der Begriff "Fluidlack" umfasst insbesondere die Begriffe "Flüssiglack" und "Nasslack".

Bei der Verwendung von Fluidlack ist der Lack-Overspray aus der Lackiervorrichtung somit ein Fluidlack-Overspray, bei der Verwendung von Nasslack ein Nasslack-Overspray.

Als Hilfsmaterial kann insbesondere jedes Medium verwendet werden, welches dazu in der Lage ist, einen Flüssigkeitsanteil des Lack-Overspray aufzunehmen.

Hilfsmaterial ist vorzugsweise ein teilchenförmiges und/oder pulverförmiges Material.

Insbesondere kommen als Hilfsmaterialien beispielsweise Kalk, Steinmehl, insbesondere Kalksteinmehl, Aluminiumsilikate, Aluminiumoxide, Siliziumoxide, Pulverlack oder Ähnliches in Betracht.

Alternativ oder ergänzend hierzu können als Hilfsmaterial zur Aufnahme und/oder Bindung der Partikel auch Teilchen mit einer Hohlraumstruktur und relativ zu ihren Außenabmessungen großer innerer Oberfläche verwendet werden, beispielsweise natürliche und/oder synthetische Zeolithe oder andere hohle, beispielsweise kugelförmige, Körper aus Polymeren, Glas oder Aluminiumsilikat und/oder natürliche oder synthetisch erzeugte Fasern.

Als Zeolithe werden insbesondere Alumino-Silikate bezeichnet, welche die allgemeine Summenformel Mⁿ⁺_{x/n} [(AlO₂)^{x-} (SiO₂)^{y}] . z H₂O aufweisen (Mⁿ⁺: Metallkation; x/n: stöchiometrischer Faktor, der sich aus der Ladung des Kations und der des Aluminat-Anions ergibt (= "Modul")). Es können beispielsweise Calcium-, Magnesium-, Calcium-Magnesium-, Natrium- und/oder Kalium-Zeolithe verwendet werden. Vorzugsweise werden Mischungen aus zwei oder mehreren dieser Zeolitharten verwendet.

Alternativ oder ergänzend hierzu können als Hilfsmaterial zur Aufnahme und/oder Bindung der Partikel, insbesondere des Lack-Overspray, auch chemisch mit den Partikeln, insbesondere mit dem Lack-Overspray, reagierende Teilchen verwendet werden, beispielsweise chemisch reaktive Teilchen mit Amin-, Epoxid-, Carboxyl-, Hydroxyl- oder Isocyanat-Gruppen, chemisch reaktive Teilchen aus mit Octylsilan nachbehandeltem Aluminiumoxid oder feste oder flüssige Mono-, Oligo- oder Polymere, Silane, Silanole oder Siloxane.

Das Hilfsmaterial besteht vorzugsweise aus einer Vielzahl von Hilfsmaterial-Teilchen, welche insbesondere einen mittleren Durchmesser im Bereich von ungefähr 10 µm bis ungefähr 100 µm aufweisen.

Das Hilfsmaterial ist insbesondere ein fließfähiges, partikelförmiges Material, welches beispielsweise in Form von Filterhilfsmaterial auch als "Precoat"-Material bezeichnet wird.

Das Filterhilfsmaterial dient insbesondere dazu, sich als Sperrschicht an der Oberfläche eines Filterelements abzusetzen, um zu verhindern, dass diese Oberfläche durch anhaftende Partikel, insbesondere Lack-Overspray-Partikel, verklebt. Durch periodisches Abreinigen des Filterelements gelangt ein System aus Partikeln und Hilfsmaterial von dem Filterelement in einen Aufnahmebehälter.

Mit Partikeln beladenes Hilfsmaterial kann insbesondere ein Gemisch oder ein System aus Partikeln und Hilfsmaterial-Teilchen sein. Beispielsweise kann das Gemisch Konglomerate und/oder Agglomerate aus Partikeln und Teilchen aus Hilfsmaterial umfassen.

Partikel aus Lack-Overspray sind insbesondere Lacktröpfchen.

Teilchen aus Hilfsmaterial sind insbesondere Steinmehlkörnchen.

Zur Reinigung des mit Partikeln beladenen Rohgasstroms verwendbares Hilfsmaterial weist vorzugsweise eine Teilchengrößenverteilung auf, welche es ermöglicht, dass zumindest ein Großteil der Teilchen des Hilfsmaterials von dem Rohgasstrom mitgerissen und/oder aufgenommen werden kann.

Die Filtervorrichtung umfasst vorzugsweise eine Abreinigungsvorrichtung, beispielsweise eine Druckluftvorrichtung, mittels welcher an mindestens einem Filterelement anhaftendes Material, insbesondere ein System aus Partikeln und Hilfsmaterial, insbesondere Filterhilfsmaterial, abreinigbar ist. Insbesondere kann eine Abreinigung mittels eines Druckluftstoßes zyklisch erfolgen.

Mindestens ein Filterelement ist vorzugsweise durch Einhängen, d.h. vertikal, oder durch seitliches Einschieben, d.h. horizontal, in der Einhausung angeordnet.

Es kann vorgesehen sein, dass mehrere Filterelemente einreihig oder mehrreihig in der Einhausung der Filtervorrichtung angeordnet sind, insbesondere abhängig von der Größe und dem Format der verwendeten Filterelemente.

Ein Reingasabschnitt der Filtervorrichtung kann abhängig von der Filteranordnung und/oder der Filterorientierung beispielsweise oberhalb eines Rohgasraums der Filtervorrichtung und/oder bezüglich der Schwerkraftrichtung seitlich neben dem Rohgasraum angeordnet sein.

Der Einlassabschnitt der Filtervorrichtung ist vorzugsweise als eine Düse oder als Düsenbereich ausgebildet.

Insbesondere kann vorgesehen sein, dass der Einlassabschnitt eine durchgängige horizontale Öffnung, insbesondere einen Schlitz, umfasst, durch welchen der Rohgasstrom dem Innenraum der Filtervorrichtung zuführbar ist.

Zur Optimierung der Strömung kann eine Blendenvorrichtung vorgesehen sein.

Bei der erfindungsgemäßen Filtervorrichtung können vorzugsweise die in der Filtervorrichtung auftretenden Strömungsgeschwindigkeiten reduziert werden. Dennoch kann vorzugsweise eine ausreichende Menge von Hilfsmaterial dem Rohgasstrom zugeführt werden. Insbesondere kann vorzugsweise gewährleistet werden, dass mindestens ein Filterelement, insbesondere sämtliche Filterelemente, ausreichend mit Hilfsmaterial beaufschlagt wird, um eine unerwünschte Verunreinigung des Filterelements mit Lack-Overspray zu vermeiden.

Vorzugsweise kann eine homogene, langsame und/oder sanfte Anströmung mindestens eines Filterelements bei geringer Walzenbildung im Einströmbereich der Filtervorrichtung erreicht werden. Vorzugsweise kann dabei die Menge an bewegtem oder mitgerissenem, dem Rohgasstrom zugeführten oder von dem Rohgasstrom aufgenommenen Hilfsmaterial (Precoat-Material) konstant gehalten werden, um einen zuverlässigen Schutz des mindestens einen Filterelements zu gewährleisten.

Vorzugsweise können durch geringe Strömungsgeschwindigkeiten geringe Verschmutzungen an den Wandungen der Filtervorrichtung und somit geringe Instandhaltungskosten und geringe Reinigungskosten erzielt werden.

Ferner kann vorzugsweise eine optimierte Schutzschicht an dem mindestens einen Filterelement ausgebildet werden. Insbesondere kann vorgesehen sein, dass eine größere Menge des Filterhilfsmaterials an dem mindestens einen Filterelement anhaften kann. Vorzugsweise kann eine gleichmäßigere Verteilung des Hilfsmaterials an dem mindestens einen Filterelement ermöglicht werden. Hierdurch ergibt sich vorzugsweise eine längere Filterstandzeit und ein besserer Schutz der Filter.

Vorzugsweise können durch die geringeren Strömungsgeschwindigkeiten in der Filtervorrichtung geringere Druckverluste realisiert werden, wodurch Energie eingespart werden kann.

Die erfindungsgemäße Filtervorrichtung, insbesondere die erfindungsgemäße Lackieranlage, kann hierdurch stabiler betrieben werden.

Eine Blendenvorrichtung der Filtervorrichtung kann im Bereich des engsten Querschnitts eines Einlasskanals der Filtervorrichtung angeordnet sein.

Alternativ oder ergänzend hierzu kann jedoch auch vorgesehen sein, dass mindestens eine Blendenvorrichtung bezüglich der Einströmrichtung vor oder hinter dem Bereich des engsten Querschnitts des Einlasskanals angeordnet ist.

Die Blendenvorrichtung, insbesondere mindestens ein Blendenelement der Blendenvorrichtung, ist vorzugsweise vollständig oder teilweise entnehmbar, klappbar und/oder versenkbar, insbesondere automatisch und/oder motorisch. Ein Austausch oder eine Reinigung können hierdurch vereinfacht werden.

Ferner kann vorgesehen sein, dass die Blendenvorrichtung, insbesondere mindestens ein Blendenelement der Blendenvorrichtung, beispielsweise bei einer Abschaltung der Filtervorrichtung oder der gesamten Lackieranlage, in eine hierfür vorgesehene spezielle Stellung bringbar ist. Hierdurch kann beispielsweise verhindert werden, dass Hilfsmaterial unerwünscht aufgewirbelt wird und beispielsweise den Innenraum der Filtervorrichtung durch den Einlassabschnitt verlässt.

Es kann vorgesehen sein, dass eine dem Innenraum der Filtervorrichtung abgewandte Seite mindestens eines Blendenelements eine dreidimensionale Gestaltung aufweist, beispielsweise spitz zuläuft oder halbzylinderförmig oder halbkugelförmig ausgebildet ist. Hierdurch kann eine Umströmung des mindestens einen Blendenelements, insbesondere eine laminare Umströmung des mindestens einen Blendenelements, optimiert werden. Eine dem Innenraum der Filtervorrichtung zugewandte Seite des mindestens einen Blendenelements ist vorzugsweise im Wesentlichen eben ausgebildet. Hierdurch kann eine große Umlenkwirkung und/oder Turbulenzerzeugung ermöglicht werden, beispielsweise um die sich bezüglich der Einströmrichtung hinter dem Blendenelement ausbildende Strömung möglichst effizient in dem Innenraum der Filtervorrichtung zu halten.

Insbesondere eine Rückströmung auf einer dem Innenraum zugewandten Seite des Blendenelements kann eine schützende Beschichtung des Blendenelements mit Hilfsmaterial ermöglichen.

Mindestens ein Strömungselement kann beispielsweise als ein Leitblech ausgebildet sein.

Mindestens ein Strömungselement weist vorzugsweise eine Form auf, welche im Zusammenhang mit dem mindestens einen Blendenelement beschrieben wurde.

Vorteilhaft kann es sein, wenn mindestens ein Strömungselement zur Versteifung desselben und/oder zur gezielten Strömungsführung eine von einer Plattenform verschiedene Form aufweist.

Es kann vorgesehen sein, dass mindestens ein Strömungselement einfach oder mehrfach unterbrochen, insbesondere mit Durchtrittsöffnungen versehen, ist.

Mindestens ein Strömungselement ist vorzugsweise quer, insbesondere schräg, zur Einströmrichtung ausgerichtet.

Die Form mindestens eines Strömungselements ist vorzugweise auf die jeweilige Strömung abgestimmt.

Besonders günstig kann es sein, wenn mindestens ein Blendenelement und/oder mindestens ein Strömungselement als eine Freiformfläche ausgebildet ist. Eine solche Freiformfläche kann beispielsweise im Einströmbereich, insbesondere innerhalb eines Aufnahmebehälters der Filtervorrichtung verspannt werden, insbesondere ohne an einer Wandung anzuliegen. Die Befestigung des mindestens einen Blendenelements und/oder Strömungselements erfolgt beispielsweise mittels Drahtseilen im Innenraum der Filtervorrichtung.

Durch die Ausgestaltung als Freiformfläche können vorzugsweise die erforderliche Fläche und damit der verbundene Reinigungsaufwand sowie der Materialeinsatz auf ein für die gewünschte Strömung erforderliches Minimum reduziert werden.

Es kann vorgesehen sein, dass das mindestens eine Strömungselement und/oder das mindestens eine Blendenelement fluiddurchlässig, insbesondere luftdurchlässig, ausgebildet ist. Beispielsweise kann vorgesehen sein, dass das mindestens eine Strömungselement und/oder das mindestens eine Blendenelement als ein Lochblech ausgebildet ist.

Günstig kann es sein, wenn mittels mindestens eines Blendenelements und/oder mittels mindestens eines Strömungselements gezielt einzelne oder mehrere Filterbereiche vor zu starker und/oder direkter Anströmung geschützt werden. Hierdurch kann die Ausbildung einer Schutzschicht aus Hilfsmaterial an dem mindestens einen Filterelement verbessert werden.

Ein mittels mindestens eines Blendenelements gebildeter Blendenabschnitt kann vorzugsweise verschoben, vergrößert, verkleinert und/oder gedreht werden.

Es kann vorgesehen sein, dass mindestens ein Zuführkanal durch eine einseitige oder mehrseitige Erweiterung der Einhausung der Filtervorrichtung gebildet ist.

Die Erweiterung kann symmetrisch oder asymmetrisch ausgebildet sein. Beispielsweise kann hierzu eine ebene oder komplex geformte Seitenwandung der Einhausung vorgesehen sein.

Ferner kann vorgesehen sein, dass einzelne Filterelemente entfallen, um gezielt Gassen für den Rohgasstrom zu bilden.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Schnittdarstellung einer ersten Ausführungsform einer Lackieranlage, bei welcher eine Filteranlage mit einseitiger Absaugung vorgesehen ist;
- Fig. 2: eine der Fig. 1 entsprechende schematische Darstellung einer zweiten Ausführungsform einer Lackieranlage, bei welcher eine Filteranlage mit zweiseitiger Absaugung vorgesehen ist;
- Fig. 3: eine schematische Schnittdarstellung einer ersten Ausführungsform einer Filtervorrichtung, bei welcher ein Einlassabschnitt der Filtervorrichtung so ausgebildet ist, dass sich in einem Innenraum der Filtervorrichtung zwei Strömungswalzen ausbilden;
- Fig. 4: eine der Fig. 3 entsprechende schematische Darstellung einer zweiten Ausführungsform einer Filtervorrichtung, bei welcher der Einlassabschnitt der Filtervorrichtung so ausgebildet ist, dass sich im Betrieb der Filtervorrichtung eine einzige Strömungswalze in dem Innenraum der Filtervorrichtung ausbildet;
- Fig. 5: eine schematische Schnittdarstellung einer dritten Ausführungsform einer Filtervorrichtung, bei welcher eine Blendenvorrichtung im Bereich des Einlassabschnitts der Filtervorrichtung vorgesehen ist;
- Fig. 6: eine schematische Schnittdarstellung durch die Filtervorrichtung aus Fig. 5 längs der Linie 6-6 in Fig. 5, mit Blick in Pfeilrichtung auf eine dem Innenraum der Filtervorrichtung zugewandte Innenseite des Einlassabschnitts und der Blendenvorrichtung;
- Fig. 7: eine schematische Darstellung eines Strömungsfelds des Rohgasstroms im Betrieb der Filtervorrichtung aus Fig. 5 in einer längs der Linie 7-7 in Fig. 6 genommenen Schnittebene;
- Fig. 8: eine der Fig. 7 entsprechende schematische Darstellung des Strömungsfelds des Rohgasstroms im Betrieb der Filtervorrichtung aus Fig. 5 in einer längs der Linie 8-8 in Fig. 6 genommenen Schnittebene;
- Fig. 9: eine schematische Schnittdarstellung einer vierten Ausführungsform einer Filtervorrichtung, bei welcher eine Strömungsführung mit zwei Strömungselementen zur Beeinflussung einer Strömungsrichtung des Rohgasstroms vorgesehen ist;
- Fig. 10: eine schematische Schnittdarstellung einer fünften Ausführungsform einer Filtervorrichtung, bei welcher ein Zuführkanal zur Zuführung von Rohgas zu einem Filterelement der Filtervorrichtung vorgesehen ist;
- Fig. 11 - 16: schematische Schnittdarstellungen von verschiedenen Ausführungsformen von Blendenvorrichtungen;
- Fig. 17 - 29: schematische perspektivische Darstellungen von verschiedenen Ausführungsformen von Blendenvorrichtungen;
- Fig. 30 - 39: schematische Darstellungen von verschiedenen Ausführungsformen von Blendenelementen;
- Fig. 40: eine schematische Darstellung der Umströmung des Blendenelements aus Fig. 30 im Betrieb der Filtervorrichtung;
- Fig. 41: eine der Fig. 40 entsprechende schematische Darstellung der Umströmung des Blendenelements aus Fig. 35 im Betrieb der Filtervorrichtung;
- Fig. 42: eine schematische perspektivische Darstellung einer sechsten Ausführungsform einer Filtervorrichtung, bei welcher eines oder mehrere Filterelemente sich bis zu allen vier seitlichen Wandungen einer Einhausung der Filtervorrichtung erstrecken;
- Fig. 43: eine der Fig. 42 entsprechende schematische perspektivische Darstellung einer siebten Ausführungsform einer Filtervorrichtung, bei welcher, ähnlich der in Fig. 10 dargestellten fünften Ausführungsform, ein Zuführkanal zur Zuführung von Rohgas zu einem oder mehreren Filterelementen vorgesehen ist;
- Fig. 44: eine der Fig. 42 entsprechende schematische perspektivische Darstellung einer achten Ausführungsform einer Filtervorrichtung, bei welcher zwei Zuführkanäle vorgesehen sind, welche auf einander gegenüberliegenden Seiten eines oder mehrerer Filterelemente angeordnet sind;
- Fig. 45: eine schematische Schnittdarstellung einer neunten Ausführungsform einer Filtervorrichtung, bei welcher eine Strömungsführung mit einem stromabwärts eines Einlassabschnitts der Filtervorrichtung angeordneten Strömungselement vorgesehen ist;
- Fig. 46: eine der Fig. 45 entsprechende schematische Darstellung einer zehnten Ausführungsform einer Filtervorrichtung, bei welcher ein Strömungselement einer Strömungsführung vorgesehen ist, welches in einem dem Einlassabschnitt gegenüberliegenden Bereich des Innenraums der Filtervorrichtung angeordnet ist;
- Fig. 47: eine der Fig. 45 entsprechende schematische Darstellung einer elften Ausführungsform einer Filtervorrichtung, bei welcher ein zumindest näherungsweise sich längs einer vertikalen Längsmittelebene der Filtervorrichtung erstreckendes Strömungselement einer Strömungsführung vorgesehen ist;
- Fig. 48: eine der Fig. 45 entsprechende schematische Darstellung einer zwölften Ausführungsform einer Filtervorrichtung, bei welcher ein stromaufwärts des Einlassabschnitts angeordnetes Strömungselement einer Strömungsführung vorgesehen ist;
- Fig. 49: eine der Fig. 45 entsprechende schematische Darstellung einer dreizehnten Ausführungsform einer Filtervorrichtung, bei welcher drei Strömungselemente einer Strömungsführung vorgesehen sind, die in einem Zuführkanal der Filtervorrichtung angeordnet sind; und
- Fig. 50: eine der Fig. 45 entsprechende schematische Darstellung einer vierzehnten Ausführungsform einer Filtervorrichtung, bei welcher drei vertikal ausgerichtete Strömungselemente einer Strömungsführung vorgesehen sind.

Gleiche oder funktional äquivalente Elemente sind in sämtlichen Figuren mit denselben Bezugszeichen versehen.

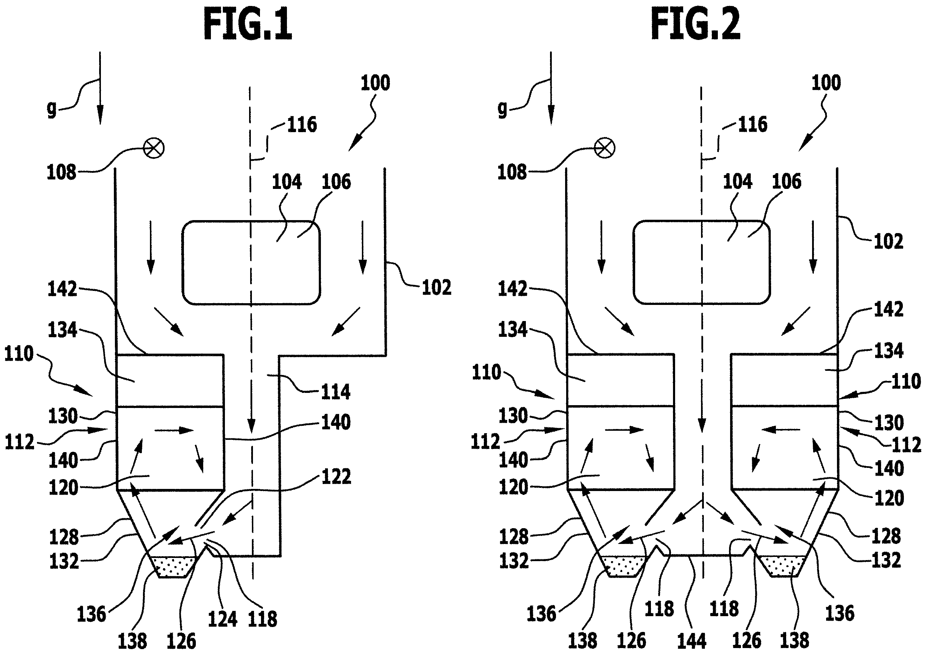

Eine in Fig. 1 dargestellte, als Ganzes mit 100 bezeichnete Lackieranlage umfasst eine Lackierkabine 102, in welcher Werkstücke 104, insbesondere Fahrzeugkarosserien 106, lackierbar sind.

Die Werkstücke 104 sind hierzu insbesondere mittels einer (nicht dargestellten) Fördervorrichtung längs einer Förderrichtung 108 durch die Lackierkabine 102 hindurch förderbar.

Im Betrieb der Lackieranlage 100 ist die Lackierkabine 102 mit Luft durchströmbar, so dass im Lackierbetrieb anfallender Lack-Overspray einfach aus der Lackierkabine 102 entfernbar ist.

Die Lackierkabine 102 wird hierbei insbesondere in der Schwerkraftrichtung g von oben nach unten durchströmt.

Unter der Lackierkabine 102 ist eine Filteranlage 110 angeordnet.

Mittels der Filteranlage 110 kann die als Rohgasstrom aus der Lackierkabine 102 abgeführte, mit Lack-Overspray beladene Luft gereinigt werden.

Die Filteranlage 110 umfasst bei der in Fig. 1 dargestellten ersten Ausführungsform der Lackieranlage 100 eine oder mehrere Filtervorrichtungen 112, welchen durch einen Rohgasschacht 114 der Filteranlage 110 der aus der Lackierkabine 102 abgeführte Rohgasstrom zuführbar ist.

Der Rohgasschacht 114 erstreckt sich längs einer vertikalen Längsmittelebene 116 der Lackieranlage 100 in der Schwerkraftrichtung g von der Lackierkabine 102 bis zu einem Einlassabschnitt 118 der Filtervorrichtung 112.

Die Filtervorrichtung 112, insbesondere der Einlassabschnitt 118 der Filtervorrichtung 112, ist dabei bezüglich der Schwerkraftrichtung g seitlich neben dem Rohgasschacht 114 angeordnet, so dass der durch den Rohgasschacht 114 geführte Rohgasstrom einseitig der Filtervorrichtung 112 zugeführt wird.

Der Einlassabschnitt 118 der Filtervorrichtung 112 ist insbesondere derjenige Bereich der Filtervorrichtung 112, durch welchen der Rohgasstrom einem Innenraum 120 der Filtervorrichtung 112 zuführbar ist.

Der Einlassabschnitt 118 umfasst dabei vorzugsweise einen Einlasskanal 122 und mindestens eine Einlassöffnung 124.

Es kann jedoch auch vorgesehen sein, dass der Einlassabschnitt 118 bezüglich einer Einströmrichtung 126 des Rohgasstroms stromaufwärts oder stromabwärts des Einlasskanals 122 angeordnet ist.

Der Innenraum 120 der Filtervorrichtung 112 wird von einer Einhausung 128 der Filtervorrichtung 112 begrenzt.

Die Einhausung 128 umfasst dabei insbesondere einen quaderförmigen Abschnitt 130 und einen trichterförmigen Abschnitt 132.

Der quaderförmige Abschnitt 130 dient insbesondere der Aufnahme von mindestens einem Filterelement 134.

Der trichterförmige Abschnitt 132 bildet insbesondere einen Einströmbereich 136 der Filtervorrichtung 112 und/oder einen Aufnahmebehälter 138 zur Aufnahme von Hilfsmaterial, insbesondere Filterhilfsmaterial.

Der Einlassabschnitt 118 der Filtervorrichtung 112 ist bei der in Fig. 1 dargestellten ersten Ausführungsform der Lackieranlage 100 so ausgebildet, dass der durch den Einlassabschnitt 118 in den Innenraum 120 einströmende Rohgasstrom das im Aufnahmebehälter 138 angeordnete Hilfsmaterial aufwirbeln und aufnehmen kann. Das Hilfsmaterial kann dabei insbesondere zusammen mit dem Lack-Overspray des Rohgasstroms ein stabiles System aus Lack-Overspray und Hilfsmaterial bilden. Beispielsweise kann mittels des Hilfsmaterials ein Fluidanteil des Nasslack-Overspray aufgenommen werden. Das System oder Gemisch aus Lack-Overspray und Hilfsmaterial kann an dem Filterelement 134 der Filtervorrichtung 112 abgeschieden werden, so dass die durch die Filterelemente 134 geführte Luft als Reingasstrom mittels einer (nicht dargestellten) Reingasführung abführbar ist.

Aufgrund der Verwendung von Hilfsmaterial zur Abscheidung des Lack-Overspray aus dem Rohgasstrom kann ein im Betrieb der Filtervorrichtung 112 an dem mindestens einem Filterelement 134 gebildeter Filterkuchen einfach, beispielsweise durch eine Druckluft-Rückspülung, von dem mindestens einen Filterelement 134 entfernt werden.

Die Filtervorrichtung 112 ist somit einfach regenerierbar, so dass sie auch als regenerierbare Filtervorrichtung 112 bezeichnet werden kann.

Die vorstehend beschriebene erste Ausführungsform der Lackieranlage 100 funktioniert wie folgt:
Im Lackierbetrieb der Lackierkabine 102 wird ein geringer Teil des auf die Werkstücke 104 gerichteten Lacks als Lack-Overspray von der durch die Lackierkabine 102 geführten Luft aufgenommen. Die mit Lack-Overspray beladene Luft muss aus der Lackierkabine 102 entfernt werden, um eine unerwünschte Verunreinigung von Bauteilen der Lackierkabine 102 und anderen Werkstücken 104 zu vermeiden. Die mit Lack-Overspray beladene Luft wird hierzu als Overspray-Partikel enthaltender Rohgasstrom aus der Lackierkabine 102 der Filteranlage 110 zugeführt.

In der Filteranlage 110 wird der Rohgasstrom durch den Rohgasschacht 114 in der Schwerkraftrichtung g nach unten geführt und durch den Einlassabschnitt 118 der Filtervorrichtung 112 dem Innenraum 120 der Filtervorrichtung 112 zugeführt.

Aufgrund der geometrischen Gestaltung des Einlassabschnitts 118 und des Innenraums 120 der Filtervorrichtung 112 wird der Rohgasstrom zunächst dem im Aufnahmebehälter 138 befindlichen Hilfsmaterial zugeführt, um dieses aufzuwirbeln und aufzunehmen. Oberhalb des Aufnahmebehälters 138, insbesondere in dem Einströmbereich 136 und/oder zumindest einem Abschnitt des quaderförmigen Abschnitts 130 bildet sich eine Strömungswalze aus.

Der Rohgasstrom strömt dabei in einer näherungsweise horizontalen Einströmrichtung 126 in den Innenraum 120 ein und wird im Einströmbereich 136, insbesondere in dem trichterförmigen Abschnitt 132 des Innenraums 120 umgelenkt und an einer dem Einlassabschnitt 118 gegenüberliegenden Seitenwandung 140 der Einhausung 128 entgegen der Schwerkraftrichtung g nach oben geführt.

An dem Filterelement 134 und/oder an einer Deckenwandung 142 erfolgt eine weitere Umlenkung des Rohgasstroms in eine der Einströmrichtung 126 im Wesentlichen entgegengesetzte Richtung. Längs derjenigen Seitenwandung 140, in welcher der Einlassabschnitt 118 der Filtervorrichtung 112 angeordnet ist, wird der Rohgasstrom schließlich in der Schwerkraftrichtung g nach unten geführt.

Eine in Fig. 2 dargestellte zweite Ausführungsform einer Lackieranlage 100 unterscheidet sich von der in Fig. 1 dargestellten ersten Ausführungsform im Wesentlichen dadurch, dass zu beiden Seiten des Rohgasschachts 114 eine oder mehrere Filtervorrichtungen 112 angeordnet sind.

Die Filtervorrichtungen 112 sind dabei bezüglich der vertikalen Längsmittelebene 116 im Wesentlichen spiegelsymmetrisch zueinander ausgebildet und im Wesentlichen spiegelsymmetrisch zueinander angeordnet.

Der Rohgasstrom wird somit bei der in Fig. 2 dargestellte zweiten Ausführungsform der Lackieranlage 100 an einem der Lackierkabine 102 abgewandten Ende 144 des Rohgasschachts 114 beidseitig aus dem Rohgasschacht 114 abgeführt und den Filtervorrichtungen 112 zugeführt.

Im Übrigen stimmt die in Fig. 2 dargestellte zweite Ausführungsform der Lackieranlage 100 hinsichtlich Aufbau und Funktion mit der in Fig. 1 dargestellten ersten Ausführungsform überein, so dass auf deren vorstehende Beschreibung insoweit Bezug genommen wird.

In den Fig. 1 und 2 wurden die Filtervorrichtungen 112 lediglich hinsichtlich ihrer Grundfunktionen beschrieben. Nachfolgend werden einzelne Ausführungsformen von Filtervorrichtungen 112 detailliert beschrieben.

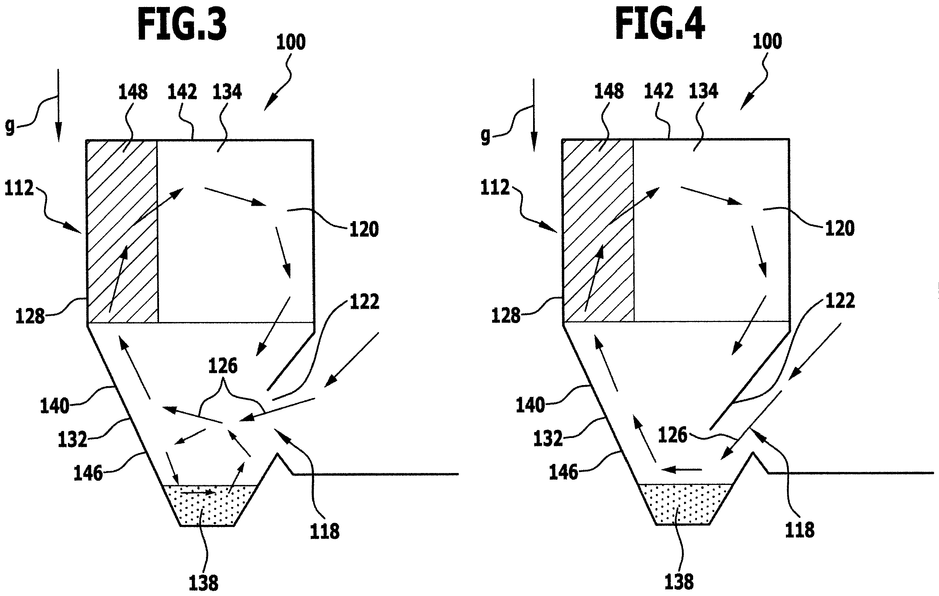

Eine in Fig. 3 dargestellte erste Ausführungsform einer Filtervorrichtung 112 entspricht hinsichtlich Aufbau und Funktion im Wesentlichen der mit Hinblick auf Fig. 1 beschriebenen Filtervorrichtung 112.

Bei der in Fig. 3 dargestellten ersten Ausführungsform einer Filtervorrichtung 112 ist vorgesehen, dass der durch den Einlassabschnitt 118 in den Innenraum 120 geführte Rohgasstrom in einer im Wesentlichen horizontalen Einströmrichtung 126 in den Innenraum 120 einströmt. An der dem Einlassabschnitt 118 gegenüberliegenden Seitenwandung 140 wird der Rohgasstrom geteilt und teilweise entgegen der Schwerkraftrichtung g nach oben und teilweise in der Schwerkraftrichtung g nach unten abgelenkt.

Der nach oben abgelenkte Teil des Rohgasstroms bildet eine im Bereich des mindestens einen Filterelements 134 sich erstreckende Strömungswalze aus. Der in der Schwerkraftrichtung g nach unten abgelenkte Teil des Rohgasstroms bildet eine im Bereich des Aufnahmebehälters 138 sich erstreckende Strömungswalze aus.

Durch die zwei Strömungswalzen kann ein Aufwirbeln des Hilfsmaterials aus dem Aufnahmebehälter 138 und ein Zuführen desselben zu dem mindestens einen Filterelement 134 erschwert werden.

Entscheidend für einen zuverlässigen Betrieb der Filtervorrichtung 112 sind dabei die dem Einlassabschnitt 118 abgewandte Seitenwandung 140, insbesondere im Bereich des trichterförmigen Abschnitts 132, und der dem Einlassabschnitt 118 abgewandte Bereich des mindestens einen Filterelements 134.

Der dem Einlassabschnitt 118 gegenüberliegende Abschnitt der Seitenwandung 140 bildet somit einen kritischen Wandbereich 146, welcher für die Ausbildung der Strömung in dem Innenraum 120 von entscheidender Bedeutung ist.

Der dem Einlassabschnitt 118 abgewandte Teil des mindestens einen Filterelements 134 bildet einen kritischen Filterbereich 148, welcher bei ungünstiger Strömung in dem Innenraum 120 unerwünschterweise von Hilfsmaterial befreit und/oder zu stark mit Lack-Overspray beaufschlagt werden kann.

Die in Fig. 4 dargestellte zweite Ausführungsform der Filtervorrichtung 112 unterscheidet sich von der in Fig. 3 dargestellten ersten Ausführungsform im Wesentlichen dadurch, dass ein verlängerter Einlasskanal 122 vorgesehen ist.

Mittels des verlängerten Einlasskanals 122 kann bei der in Fig. 4 dargestellten zweiten Ausführungsform der Filtervorrichtung 112 der in den Innenraum 120 geführte Rohgasstrom weit in den Aufnahmebehälter 138 hineingeführt werden, so dass der Rohgasstrom in dem Aufnahmebehälter 138 umgelenkt und zumindest näherungsweise vollständig längs der Seitenwandung 140 entgegen der Schwerkraftrichtung g nach oben geleitet wird.

In dem Aufnahmebehälter 138 kann sich somit keine separate Strömungswalze ausbilden. Vielmehr kann bei der in Fig. 4 dargestellten zweiten Ausführungsform der Filtervorrichtung 112 zuverlässig eine einzige Strömungswalze ausgebildet werden, um eine gewünschte Menge Hilfsmaterial aus dem Aufnahmebehälter 138 aufwirbeln und dem mindestens einen Filterelement 134 zuführen zu können. Der Rohgasstrom kann hierdurch zuverlässig gereinigt werden.

Im Übrigen stimmt die in Fig. 4 dargestellte zweite Ausführungsform der Filtervorrichtung 112 hinsichtlich Aufbau und Funktion mit der in Fig. 3 dargestellten ersten Ausführungsform bzw. mit den mit Hinblick auf die Fig. 1 und 2 beschriebenen Filtervorrichtungen 112 überein, so dass auf deren vorstehende Beschreibungen insoweit Bezug genommen wird.

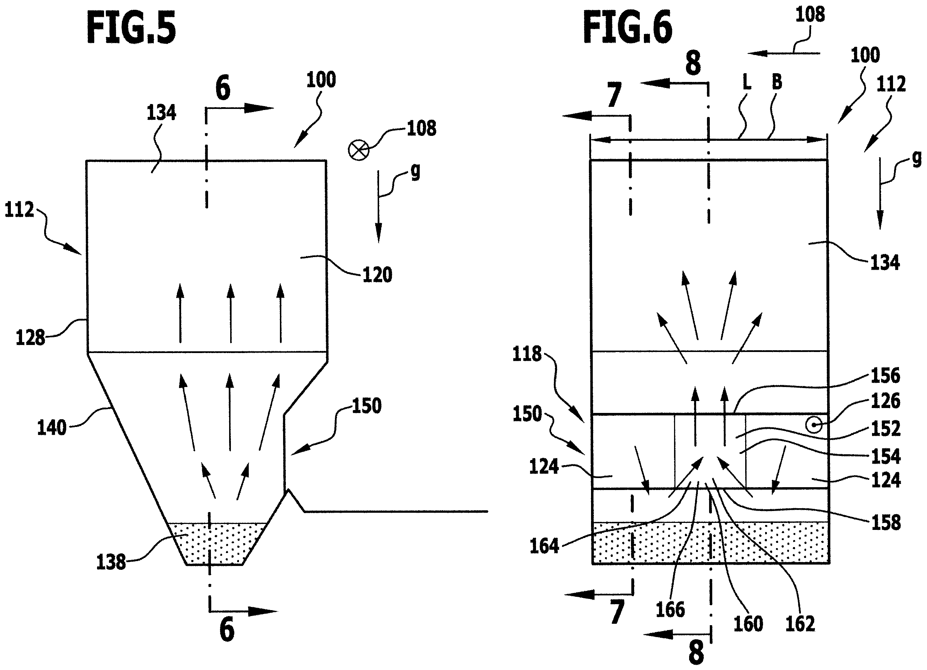

Eine in den Fig. 5 bis 8 dargestellte dritte Ausführungsform einer Filtervorrichtung 112 unterscheidet sich von der in Fig. 4 dargestellten zweiten Ausführungsform im Wesentlichen dadurch, dass der Einlassabschnitt 118 mit einer Blendenvorrichtung 150 versehen ist.

Die Blendenvorrichtung 150 umfasst mindestens ein Blendenelement 152, mittels welchem der Einlassabschnitt 118 der Filtervorrichtung 112 abschnittsweise abdeckbar ist.

Wie insbesondere Fig. 6 zu entnehmen ist, bildet das Blendenelement 152 beispielsweise einen Steg 154, welcher sich von einer bezüglich der Schwerkraftrichtung g oberen Seite 156 des Einlassabschnitts 118 bis zu einer bezüglich der Schwerkraftrichtung g unteren Seite 158 des Einlassabschnitts 118 erstreckt.

Mittels des Blendenelements 152 wird der Einlassabschnitt 118 bei der in den Fig. 5 bis 8 dargestellten dritten Ausführungsform der Filtervorrichtung 112 somit in drei Bereiche unterteilt, nämlich in zwei Einlassöffnungen 124, welche mittels eines Blendenabschnitts 160 voneinander getrennt sind.

Der Einlassabschnitt 118 der Filtervorrichtung 112 erstreckt sich vorzugsweise über eine gesamte Länge L oder eine gesamte Breite B der Filtervorrichtung 112.

Die drei Bereiche des Einlassabschnitts 118 weisen vorzugsweise einander ähnliche Dimensionen auf, so dass beispielsweise ein mittleres Drittel des Einlassabschnitts 118 der Blendenabschnitt 160 ist, welcher von den zwei weiteren Dritteln, nämlich den Einlassöffnungen 124, umgeben ist.

Mittels des Blendenelements 152 wird verhindert, dass der durch den Einlassabschnitt 118 in den Innenraum 120 strömende Rohgasstrom über die gesamte Breite B oder Länge L in den Innenraum 120 geführt wird.

Mittels des Blendenelements 152 wird der Rohgasstrom somit abschnittsweise blockiert.

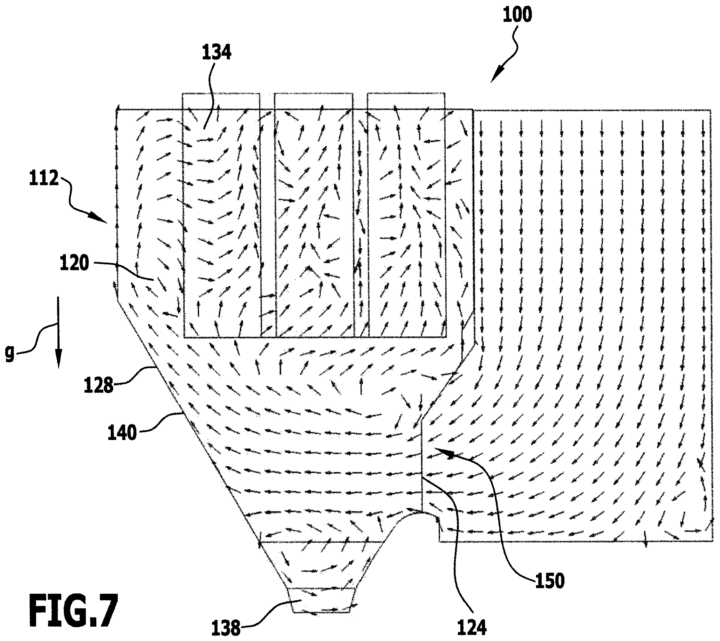

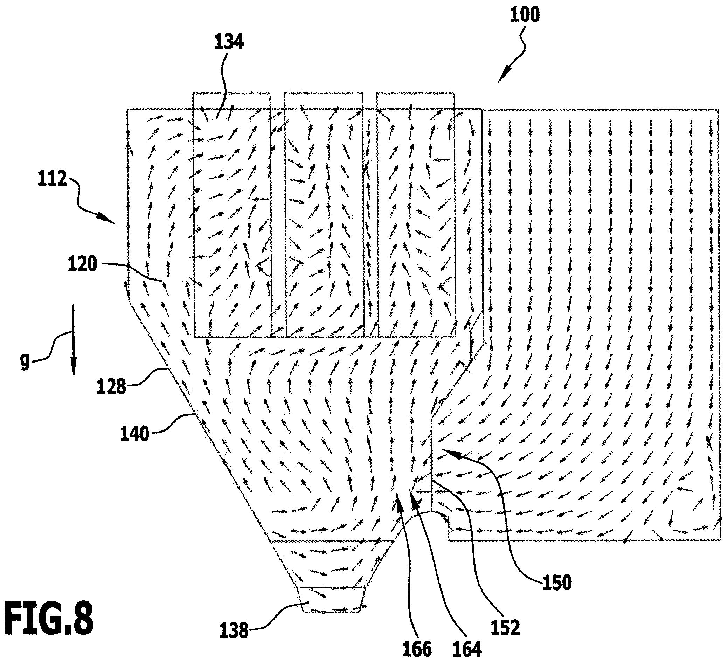

Wie insbesondere den schematischen Strömungsfeldern in den Fig. 7 und 8 zu entnehmen ist, führt dies dazu, dass das Strömungsfeld des Rohgasstroms in einer im Bereich der Einlassöffnung 124 senkrecht zur Förderrichtung 108 genommenen Ebene zumindest näherungsweise dem in Fig. 3 dargestellten und diesbezüglich beschriebenen Strömungsfeld entspricht. Insbesondere kann hierbei vorgesehen sein, dass sich in dieser Ebene zwei Strömungswalzen, nämlich eine oberhalb und eine unterhalb des Einlassabschnitts 118, ausbilden.

Wie insbesondere Fig. 8 zu entnehmen ist, ergibt sich im Bereich hinter dem Blendenelement 152 eine deutlich andere Strömung.

Gemäß dem in Fig. 8 dargestellten Strömungsfeld in einer im Bereich des Blendenelements 152 senkrecht zur Förderrichtung 108 genommenen Ebene strömt der Rohgasstrom an der dem Einlassabschnitt 118 gegenüberliegenden Seitenwandung 140 der Einhausung 128 in einer senkrecht zur dargestellten Ebene verlaufenden Richtung in diese Ebene. Daran anschließend strömt der Rohgasstrom zumindest teilweise durch den Aufnahmebehälter 138 hindurch, und entgegen der Einströmrichtung 126 und schließlich entgegen der Schwerkraftrichtung g längs des Blendenelements 152 nach oben.

Der Bereich direkt hinter dem Blendenelement 152 auf einer dem Innenraum 120 zugewandten Seite 162 des Blendenelements 152 bildet somit einen Querstrombereich 164, in welchem die Strömungsrichtung des Rohgasstroms quer, insbesondere zumindest näherungsweise senkrecht, zur Einströmrichtung 126 ausgerichtet ist.

Insbesondere dann, wenn direkt hinter dem Blendenelement 152 auf der dem Innenraum 120 zugewandten Seite 162 des Blendenelements 152 sich eine der Einströmrichtung 126 entgegengesetzte Strömung ausbildet, kann der Querstrombereich 164 auch als Rückstrombereich 166 bezeichnet werden.

In dem Querstrombereich 164 bzw. in dem Rückstrombereich 166 wird der Transport von Rohgas und Hilfsmaterial aus dem Aufnahmebehälter 138 entgegen der Schwerkraftrichtung g nach oben bis hin zu den Filterelementen 134 nicht von dem in den Innenraum 120 einströmenden Rohgasstrom behindert. Das mindestens eine Filterelement 134 kann hierdurch zuverlässig mit Hilfsmaterial versorgt, insbesondere beschichtet, werden.

Mittels des Blendenelements 152 der Blendenvorrichtung 150 kann somit ein besonders zuverlässiger Betrieb der Filtervorrichtung 112 ermöglicht werden.

Im Übrigen stimmt die in den Fig. 5 bis 8 dargestellte dritte Ausführungsform der Filtervorrichtung 112 hinsichtlich Aufbau und Funktion mit der in Fig. 4 dargestellten zweiten Ausführungsform überein, so dass auf deren vorstehende Beschreibung insoweit Bezug genommen wird.

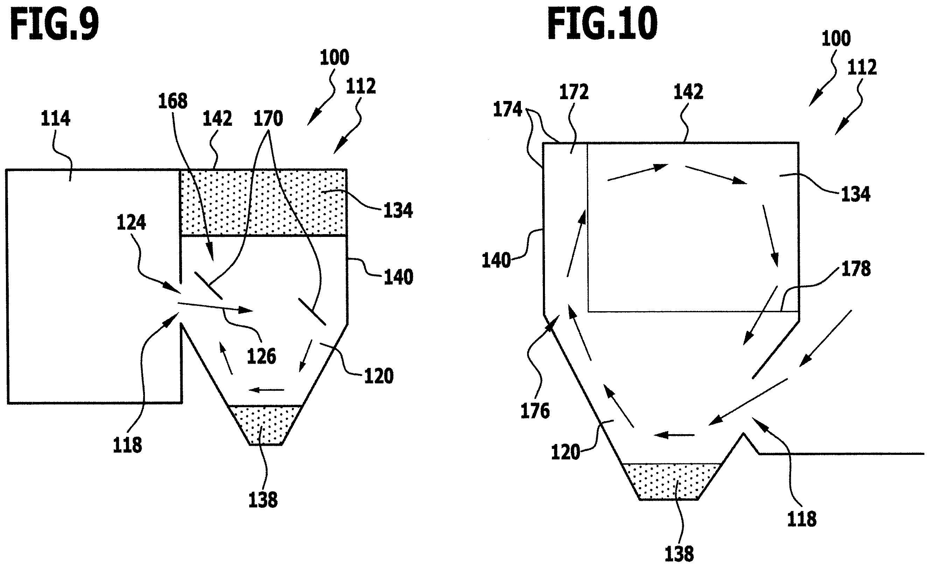

Eine in Fig. 9 dargestellte vierte Ausführungsform einer Filtervorrichtung 112 unterscheidet sich von der in den Fig. 5 bis 8 dargestellten dritten Ausführungsform im Wesentlichen dadurch, dass in dem Innenraum 120 eine Strömungsführung 168 angeordnet ist.

Die Strömungsführung 168 umfasst beispielsweise zwei Strömungselemente 170, mittels welchen die Strömung in dem Innenraum 120 der Filtervorrichtung 112 gezielt beeinflussbar ist.

Bei der in Fig. 9 dargestellten vierten Ausführungsform der Filtervorrichtung 112 ist insbesondere vorgesehen, dass der in der Einströmrichtung 126 einströmende Rohgasstrom in der Schwerkraftrichtung g nach unten abgelenkt wird. Hierdurch kann der Rohgasstrom gezielt in den Aufnahmebehälter 138 gerichtet werden, um zuverlässig Hilfsmaterial aufwirbeln zu können.

Besonders vorteilhaft kann es sein, wenn die Strömungselemente 170 bezüglich der Einströmrichtung 126 direkt stromabwärts mindestens einer Einlassöffnung 124 angeordnet sind.

Auch stromabwärts eines Blendenelements 152 kann ein Strömungselement 170 vorgesehen sein, das die Strömung vorzugsweise nach oben ablenkt, um die entgegen der Schwerkraftrichtung g ausgerichtete Strömung des Rohgasstroms im Bereich hinter dem Blendenelement 152 zu unterstützen.

Im Übrigen stimmt die in Fig. 9 dargestellte vierte Ausführungsform der Filtervorrichtung 112 hinsichtlich Aufbau und Funktion mit der in den Fig. 5 bis 8 dargestellten dritten Ausführungsform überein, so dass auf deren vorstehende Beschreibung insoweit Bezug genommen wird.

Bei einer alternativen Ausführungsform der Filtervorrichtung 112, welche im Wesentlichen der in Fig. 9 dargestellten vierten Ausführungsform entspricht, kann es vorteilhaft sein, wenn nicht ergänzend, sondern alternativ zur Blendenvorrichtung 150 eine Strömungsführung 168 mit einem oder mehreren Strömungselementen 170 vorgesehen ist.

Günstig kann es dabei sein, wenn in einer Projektion der Einlassöffnung 124 längs der Einströmrichtung 126 auf eine zur Einlassöffnung 124 beabstandete Ebene ein Strömungselement 170 angeordnet ist, welches von dem Rohgasstrom umströmt wird und/oder den Rohgasstrom in wenigstens zwei Teilströme teilt.

Eine in Fig. 10 dargestellte fünfte Ausführungsform einer Filtervorrichtung 112 unterscheidet sich von der in Fig. 4 dargestellten zweiten Ausführungsform im Wesentlichen dadurch, dass die Filtervorrichtung 112 einen Zuführkanal 172 umfasst.

Mittels des Zuführkanals 172 kann der in dem Innenraum 120 der Filtervorrichtung 112 geführte Rohgasstrom gezielt mindestens einem Filterelement 134, insbesondere großflächig, zugeführt werden.

Der Zuführkanal 172 ist dabei von mindestens zwei, insbesondere von vier, Wandungen 174, insbesondere von drei Seitenwandungen 140 und einer Deckenwandung 142 der Einhausung 128 der Filtervorrichtung 112, sowie von dem mindestens einem Filterelement 134 begrenzt.

Der Zuführkanal 172 ist bei der in Fig. 10 dargestellten fünften Ausführungsform der Filtervorrichtung 112 auf einer dem Einlassabschnitt 118 gegenüberliegenden Seite 176 des Innenraums 120 angeordnet. Insbesondere ist eine dem Einlassabschnitt 118 gegenüberliegende Seitenwandung 140 der Einhausung 128 der Filtervorrichtung 112 eine der den Zuführkanal 172 begrenzenden Seitenwandungen 140.

Der Zuführkanal 172 erstreckt sich insbesondere ausgehend von einer Unterseite 178 mindestens eines Filterelements 134 entgegen der Schwerkraftrichtung g nach oben, beispielsweise bis zu der Deckenwandung 142.

Dadurch, dass bei der in Fig. 10 dargestellten fünften Ausführungsform der Filtervorrichtung 112 ein Zuführkanal 172 vorgesehen ist, kann der Rohgasstrom besonders gleichmäßig dem mindestens einen Filterelement 134 zugeführt werden.

Im Übrigen stimmt die in Fig. 10 dargestellte fünfte Ausführungsform der Filtervorrichtung 112 hinsichtlich Aufbau und Funktion mit der in Fig. 4 dargestellten zweiten Ausführungsform überein, so dass auf deren vorstehende Beschreibung insoweit Bezug genommen wird.

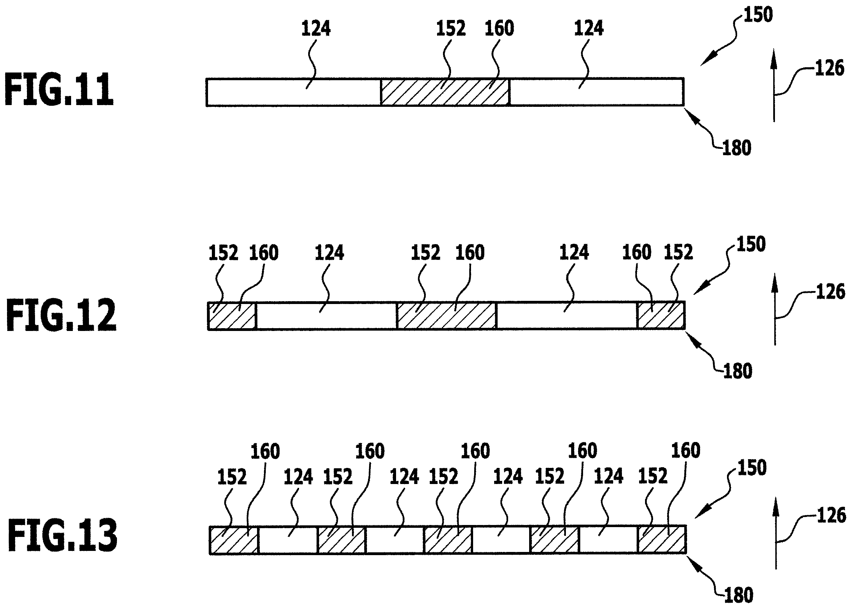

In den Fig. 11 bis 16 sind verschiedene Schnittdarstellungen von Blendenvorrichtungen 150 dargestellt.

Die Blendenvorrichtungen 150 können dabei je nach gewünschter Strömung in dem Innenraum 120 nach Belieben anstelle der Blendenvorrichtung 150 der in den Fig. 5 bis 8 dargestellten dritten Ausführungsform der Filtervorrichtung 112 verwendet werden. Selbstverständlich eignen sich die dargestellten Blendenvorrichtungen 150 jedoch auch für sämtliche anderen der dargestellten Filtervorrichtungen 112 und für weitere (nicht dargestellte) Filtervorrichtungen 112.

Die in Fig. 11 dargestellte Blendenvorrichtung 150 entspricht im Wesentlichen der Blendenvorrichtung 150 gemäß der in den Fig. 5 bis 8 dargestellten dritten Ausführungsform der Filtervorrichtung 112.

So ist insbesondere ein zentrales Blendenelement 152 vorgesehen, welches den Einlassabschnitt 118 in drei Abschnitte unterteilt und von zwei Einlassöffnungen 124 umgeben ist.

Im Betrieb der Filteranlage 112 wird das Blendenelement 152 somit zweiseitig von Rohgas umströmt.

Bei der in Fig. 12 dargestellten Ausführungsform einer Blendenvorrichtung 150 sind drei Blendenelemente 152 vorgesehen, mittels welchen zwei Einlassöffnungen 124 gebildet sind. Zwei der Blendenelement 152 sind dabei in einem Randbereich 180 der Blendenvorrichtung 150 und somit in einem Randbereich 180 des Einlassabschnitts 118 der Filtervorrichtung 112 angeordnet.

Im Übrigen stimmt die in Fig. 12 dargestellte Ausführungsform der Blendenvorrichtung 150 hinsichtlich Aufbau und Funktion mit der in Fig. 11 dargestellten Ausführungsform überein, so dass auf deren vorstehende Beschreibung insoweit Bezug genommen wird.

Eine in Fig. 13 dargestellte Ausführungsform einer Blendenvorrichtung 150 unterscheidet sich von der in Fig. 11 dargestellten Ausführungsform der Blendenvorrichtung 150 dadurch, dass fünf Blendenelemente 125 in regelmäßigen Abständen voneinander angeordnet sind und hierdurch vier Einlassöffnungen 124 gebildet sind.

Mittels der in Fig. 13 dargestellten Blendenvorrichtung 150 kann der Einlassabschnitt 118 somit in neun Abschnitte, nämlich fünf Blendenabschnitte 160 und vier Einlassöffnungen 124 unterteilt werden.

Generell kann ein größerer Rückstrombereich 166 und/oder ein größerer Querstrombereich 164, insbesondere aufgrund eines Totraumeffekts, erhalten werden, wenn breitere Blendenelemente 152 verwendet werden. Jedoch kann, wie beispielsweise in Fig. 13 dargestellt, auch durch mehrere schmale Blendenelemente 152 der in den Innenraum 120 geführte Rohgasstrom aufgebrochen und hierdurch geschwächt werden, um eine gewünschte Strömung innerhalb des Innenraums 120 zu erhalten.

Insbesondere kann durch die Verwendung mehrerer schmaler Blendenelemente 152 ein gleichmäßiger Transport von Hilfsmaterial aus dem Aufnahmebehälter 138 zu dem mindestens einen Filterelement 134 ermöglicht werden.

Im Übrigen stimmt die in Fig. 13 dargestellte Ausführungsform der Blendenvorrichtung 150 hinsichtlich Aufbau und Funktion mit der in Fig. 12 dargestellten Ausführungsform überein, so dass auf deren vorstehende Beschreibung insoweit Bezug genommen wird.

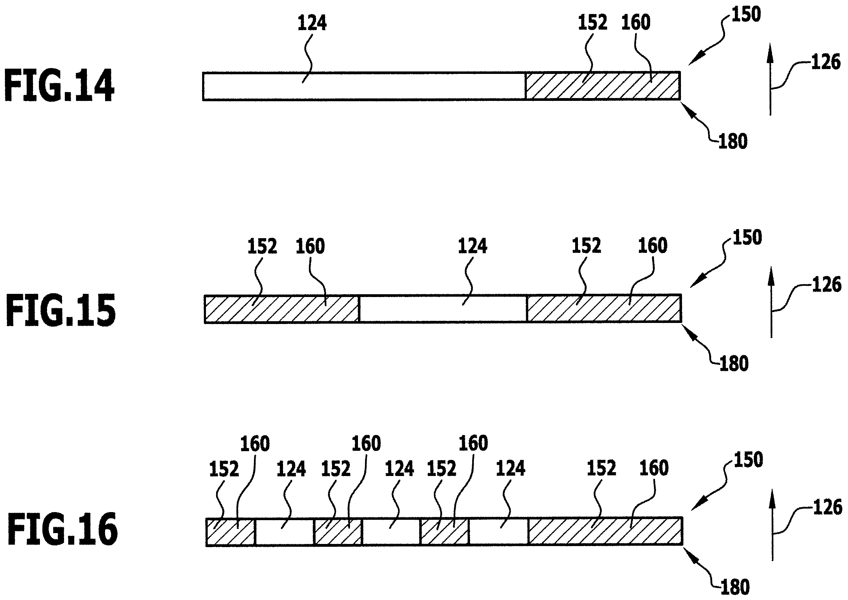

Eine in Fig. 14 dargestellte, nicht erfindungsgemäße Ausführungsform einer Blendenvorrichtung 150 unterscheidet sich von der in Fig. 11 dargestellten Ausführungsform im Wesentlichen dadurch, dass das Blendenelement 152 außermittig, nämlich in einem Randbereich 180, angeordnet ist.

Das Blendenelement 152 wird somit im Betrieb der Filtervorrichtung 112 lediglich einseitig von Rohgas umströmt.

Der Einlassabschnitt 118 ist lediglich zweigeteilt, nämlich in einen Blendenabschnitt 160 und eine Einlassöffnung 124. Hierdurch kann eine asymmetrische Strömung in dem Innenraum 120 erzeugt werden.

Im Übrigen stimmt die in Fig. 14 dargestellte Ausführungsform der Blendenvorrichtung 150 hinsichtlich Aufbau und Funktion mit der in Fig. 11 dargestellten Ausführungsform überein, so dass auf deren vorstehende Beschreibung insoweit Bezug genommen wird.

Die in Fig. 15 dargestellte, nicht erfindungsgemäße Ausführungsform der Blendenvorrichtung 150 unterscheidet sich von der in Fig. 11 dargestellten Ausführungsform im Wesentlichen dadurch, dass zwei Blendenelemente 152 und lediglich eine Einlassöffnung 124 vorgesehen sind. Die Einlassöffnung 124 ist zwischen den Blendenelementen 152 angeordnet.

Mittels der in Fig. 15 dargestellten Blendenvorrichtung 150 kann insbesondere in einem zentralen Bereich der Filtervorrichtung 112 die in Fig. 7 dargestellte Strömung erzeugt werden, während zu beiden Seiten dieses zentralen Bereichs sich die in Fig. 8 dargestellte Strömung ausbildet.

Im Übrigen stimmt die in Fig. 15 dargestellte Ausführungsform der Blendenvorrichtung 150 hinsichtlich Aufbau und Funktion mit der in Fig. 11 dargestellten Ausführungsform überein, so dass auf deren vorstehende Beschreibung insoweit Bezug genommen wird.

Eine in Fig. 16 dargestellte Ausführungsform einer Blendenvorrichtung 150 unterscheidet sich von der in Fig. 13 dargestellten Ausführungsform im Wesentlichen dadurch, dass anstelle von zwei Blendenelementen 152 und einer zwischen diesen Blendenelementen 152 angeordneten Einlassöffnung 124 ein durchgängiges großes Blendenelement 152 in einem Randbereich 180 vorgesehen ist.

Bei der in Fig. 16 dargestellten Ausführungsform der Blendenvorrichtung 150 sind somit drei schmale Blendenelemente 152 und ein breites Blendenelement 152 vorgesehen.

Die Blendenelemente 152 sind dabei asymmetrisch angeordnet, um gezielt eine asymmetrische Strömung in dem Innenraum 120 einer Filtervorrichtung 112 erzeugen zu können.

Im Übrigen stimmt die in Fig. 16 dargestellte Ausführungsform einer Blendenvorrichtung 150 hinsichtlich Aufbau und Funktion mit der in Fig. 13 dargestellten Ausführungsform überein, so dass auf deren vorstehende Beschreibung insoweit Bezug genommen wird.

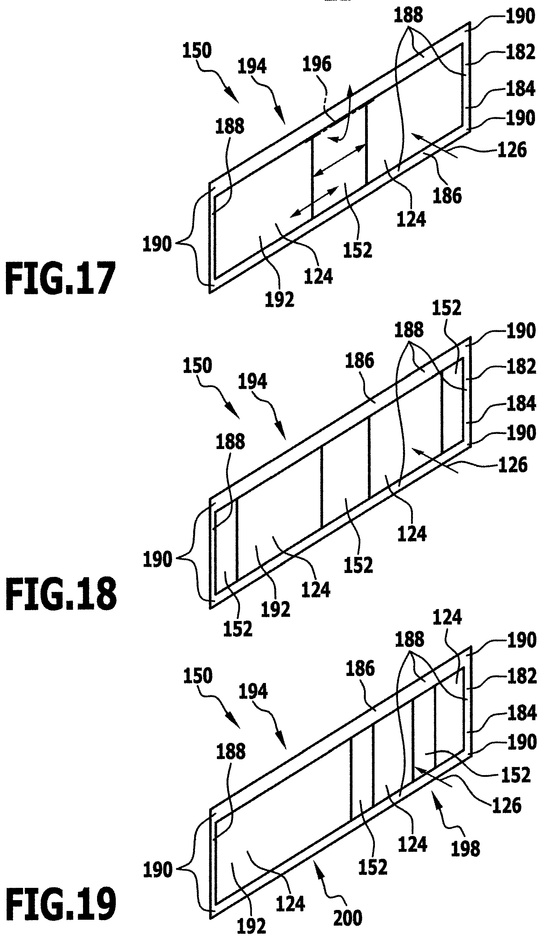

In den Fig. 17 bis 29 sind verschiedene Ausführungsformen von Blendenvorrichtungen 150 perspektivisch und schematisch dargestellt.

Grundsätzlich eignet sich jede der beschriebenen Blendenvorrichtungen 150 zur Verwendung in einer der dargestellten und/oder beschriebenen Filtervorrichtungen 112.

Die in Fig. 17 dargestellte Blendenvorrichtung 150 entspricht im Wesentlichen der in den Fig. 5 bis 8 dargestellten Ausführungsform der Blendenvorrichtung 150, wobei zusätzlich ein Aufnahmeelement 182 zur Aufnahme des mindestens einen Blendenelements 152 dargestellt ist.

Das Aufnahmeelement 182 ist insbesondere als ein Rahmenelement 184 ausgebildet und bildet im montierten Zustand der Blendenvorrichtung 150 an der Filtervorrichtung 112 vorzugsweise eine Umrandung 186 des Einlassabschnitts 118.

Das Aufnahmeelement 182 ist vorzugsweise im Wesentlichen rechteckig ausgebildet und aus beispielsweise vier Aufnahmeleisten 188 gebildet.

Insbesondere sind jeweils zwei Aufnahmeleisten 188 parallel zueinander angeordnet und verbinden mit ihren Enden 190 die Enden 190 von den beiden weiteren, ebenfalls parallel zueinander angeordneten Aufnahmeleisten 188 miteinander.

Die Aufnahmeleisten 188 umgeben eine Durchtrittsöffnung 192 des Aufnahmeelements 182, durch welche im montierten Zustand der Blendenvorrichtung 150 der Rohgasstrom strömt und welche mittels mindestens eines Blendenelements 152 abschnittsweise abgedeckt ist.

Die nicht mit mindestens einem Blendenelement 152 abgedeckten Bereiche der Durchtrittsöffnung 192 bilden eine oder mehrere Einlassöffnungen 124.

Wie insbesondere aus den Pfeilen in Fig. 17 deutlich wird, ist das Blendenelement 152 vorzugsweise beweglich und/oder drehbar an dem Aufnahmeelement 182 angeordnet.

Insbesondere kann vorgesehen sein, dass das Blendenelement 152 mittels einer Antriebsvorrichtung 194 bewegbar, insbesondere verschiebbar und/oder drehbar, ist.

Vorzugsweise ist das Blendenelement 152 um eine im Wesentlichen horizontale Achse 196 drehbar, insbesondere aus der Durchtrittsöffnung 192 herausklappbar.

Es kann jedoch auch vorgesehen sein, dass das Blendenelement 152 um eine im Wesentlichen vertikale Achse drehbar ist.

Im Übrigen stimmt die in Fig. 17 dargestellte Ausführungsform der Blendenvorrichtung 150 hinsichtlich Aufbau und Funktion mit der in den Fig. 5 bis 8 dargestellten Ausführungsform überein, so dass auf deren vorstehende Beschreibung insoweit Bezug genommen wird.

Eine in Fig. 18 dargestellte Ausführungsform einer Blendenvorrichtung 150 unterscheidet sich von der in Fig. 17 dargestellten Ausführungsform im Wesentlichen dadurch, dass anstelle des einen Blendenelements 152 drei Blendenelemente 152 gemäß der in Fig. 12 dargestellten Ausführungsform vorgesehen sind.

Im Übrigen stimmt die in Fig. 18 dargestellte Ausführungsform der Blendenvorrichtung 150 hinsichtlich Aufbau und Funktion mit der in Fig. 17 dargestellten Ausführungsform überein, so dass auf deren vorstehende Beschreibung insoweit Bezug genommen wird.

Eine in Fig. 19 dargestellte Ausführungsform einer Blendenvorrichtung 150 unterscheidet sich von der in Fig. 17 dargestellten Ausführungsform im Wesentlichen dadurch, dass zwei schmale Blendenelemente 152 asymmetrisch verteilt an dem Aufnahmeelement 182 angeordnet sind.

Mittels der Blendenelemente 152 ist dabei ein zweifach unterbrochener Abschnitt 198 der Durchtrittsöffnung 192 und ein ununterbrochener Abschnitt 200 der Durchtrittsöffnung 192 gebildet.

Auch durch derartige unterbrochene Abschnitte 198 und ununterbrochene Abschnitte 200 kann eine Strömung in einer Filtervorrichtung 112 mittels der Blendenvorrichtung 150 gezielt beeinflusst werden.

Insbesondere kann hierdurch ein teilweise unterbrochener Rohgasstrom in den Innenraum 120 der Filtervorrichtung 112 geführt werden.

Im Übrigen stimmt die in Fig. 19 dargestellte Ausführungsform der Blendenvorrichtung 150 hinsichtlich Aufbau und Funktion mit der in Fig. 17 dargestellten Ausführungsform überein, so dass auf deren vorstehende Beschreibung insoweit Bezug genommen wird.

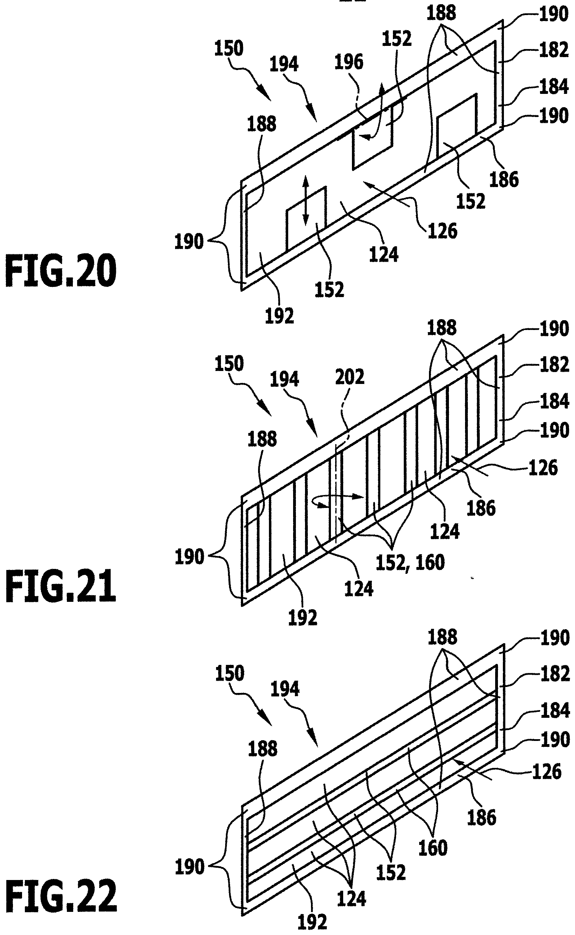

Eine in Fig. 20 dargestellte, nicht erfindungsgemäße Ausführungsform einer Blendenvorrichtung 150 unterscheidet sich von der in Fig. 17 dargestellten Ausführungsform im Wesentlichen dadurch, dass drei Blendenelemente 152 vorgesehen sind, welche in die Durchtrittsöffnung 192 hineinragen.

Die Blendenelemente 152 erstrecken sich nicht von einer Aufnahmeleiste 188 zur einer dieser Aufnahmeleiste 188 gegenüberliegenden Aufnahmeleiste 188.

Die Blendenelemente 152 sind somit bei der in Fig. 20 dargestellten Ausführungsform der Blendenvorrichtung 150 dreiseitig von Rohgas umströmt, wenn die Blendenvorrichtung 150 an einer Filtervorrichtung 112 angeordnet und die Filtervorrichtung 112 in Betrieb ist.

Auch die Blendenelemente 152 gemäß der in Fig. 20 dargestellten Ausführungsform der Blendenvorrichtung 150 können verschiebbar und/oder drehbar angeordnet sein.

Insbesondere kann vorgesehen sein, dass die Blendenelemente 152 derart verschiebbar an dem Aufnahmeelement 182 angeordnet sind, dass sie nach Bedarf unterschiedlich weit in die Durchtrittsöffnung 192 hineinragen.

Im Übrigen stimmt die in Fig. 20 dargestellte Ausführungsform der Blendenvorrichtung 150 hinsichtlich Aufbau und Funktion mit der in Fig. 17 dargestellten Ausführungsform überein, so dass auf deren vorstehende Beschreibung insoweit Bezug genommen wird.

Eine in Fig. 21 dargestellte Ausführungsform einer Blendenvorrichtung 150 unterscheidet sich von der in Fig. 17 dargestellten Ausführungsform im Wesentlichen dadurch, dass mehrere Blendenelemente 152, beispielsweise sieben Blendenelemente 152, gleichmäßig verteilt an dem Aufnahmeelement 182 angeordnet sind.

Die Blendenelemente 152 sind dabei insbesondere um eine vertikale Achse 202 drehbar an dem Aufnahmeelement 182 angeordnet.

Die Blendenelemente 152 können hierdurch wahlweise den durch die Durchtrittsöffnung 192 strömenden Rohgasstrom blockieren oder aber die Strömungsrichtung des Rohgasstroms, insbesondere die Einströmrichtung 126, gezielt beeinflussen.

Im Übrigen stimmt die in Fig. 21 dargestellte Ausführungsform der Blendenvorrichtung 150 hinsichtlich Aufbau und Funktion mit der in Fig. 17 dargestellten Ausführungsform überein, so dass auf deren vorstehende Beschreibung insoweit Bezug genommen wird.

Eine in Fig. 22 dargestellte, nicht erfindungsgemäße Ausführungsform einer Blendenvorrichtung 150 unterscheidet sich von der in Fig. 17 dargestellten Ausführungsform im Wesentlichen dadurch, dass zwei als horizontale Stege 154 ausgebildete Blendenelemente 152 vorgesehen sind.

Mittels der Blendenelemente 152 wird die Durchtrittsöffnung 192 somit in vertikaler Richtung in fünf Abschnitte, nämlich zwei Blendenabschnitte 160 und drei Einlassöffnungen 124, unterteilt.

Im Übrigen stimmt die in Fig. 22 dargestellte Ausführungsform der Blendenvorrichtung 150 hinsichtlich Aufbau und Funktion mit der in Fig. 17 dargestellten Ausführungsform überein, so dass auf deren vorstehende Beschreibung insoweit Bezug genommen wird.

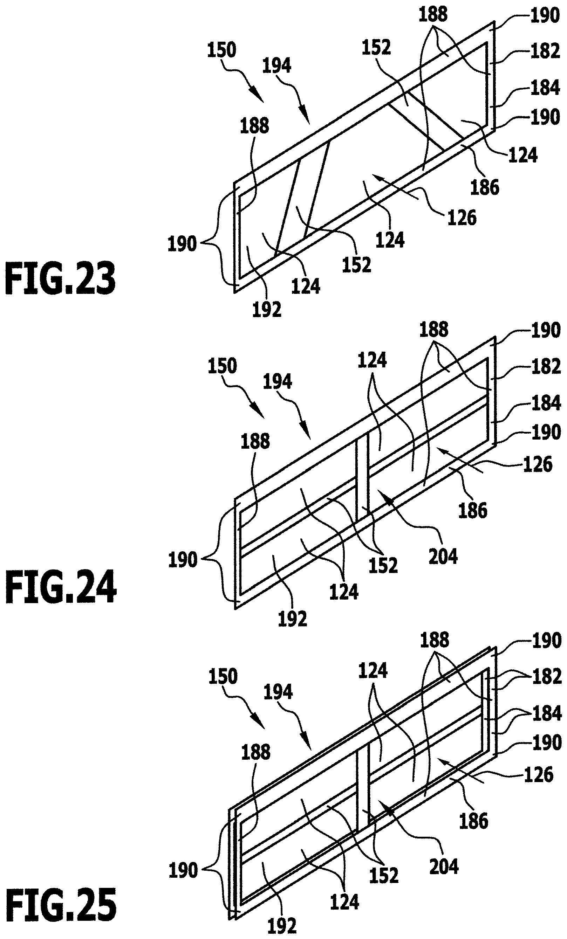

Eine in Fig. 23 dargestellte Ausführungsform einer Blendenvorrichtung 150 unterscheidet sich von der in Fig. 17 dargestellten Ausführungsform im Wesentlichen dadurch, dass zwei Blendenelemente 152 quer zu den Aufnahmeleisten 188 des Aufnahmeelements 182 und quer zueinander ausgerichtet sind.

Mittels solcher Blendenelemente 152 können insbesondere ungleichmäßig geformte Einlassöffnungen 124 bereitgestellt werden.

Im Übrigen stimmt die in Fig. 23 dargestellte Ausführungsform der Blendenvorrichtung 150 hinsichtlich Aufbau und Funktion mit der in Fig. 17 dargestellten Ausführungsform überein, so dass auf deren vorstehende Beschreibung insoweit Bezug genommen wird.

Eine in Fig. 24 dargestellte Ausführungsform einer Blendenvorrichtung 150 unterscheidet sich von der in Fig. 17 dargestellten Ausführungsform im Wesentlichen dadurch, dass zwei Blendenelemente 152 vorgesehen sind, wobei ein Blendenelement 152 horizontal ausgerichtet ist und ein weiteres Blendenelement 152 vertikal ausgerichtet ist.

Die Blendenelemente 152 bilden somit eine kreuzförmige Struktur 204.

Mittels der kreuzförmigen Struktur 204 sind vier Einlassöffnungen 124 gebildet, wobei jeweils zwei Einlassöffnungen 124 in vertikaler Richtung übereinander und in horizontaler Richtung nebeneinander angeordnet sind.

Im Übrigen stimmt die in Fig. 24 dargestellte Ausführungsform einer Blendenvorrichtung 150 hinsichtlich Aufbau und Funktion mit der in Fig. 17 dargestellten Ausführungsform überein, so dass auf deren vorstehende Beschreibung insoweit Bezug genommen wird.

Eine in Fig. 25 dargestellte Ausführungsform einer Blendenvorrichtung 150 unterscheidet sich von der in Fig. 24 dargestellten Ausführungsform im Wesentlichen dadurch, dass die Blendenvorrichtung 150 zwei Aufnahmeelemente 182 umfasst.

An jedem Aufnahmeelement 182 ist ein Blendenelement 152 angeordnet.

Die Blendenelemente 152 sind ebenso wie die Aufnahmeelemente 182 bezüglich der Einströmrichtung 126 des Rohgasstroms versetzt zueinander, insbesondere hintereinander und beabstandet voneinander, angeordnet. Hierdurch kann vermieden werden, dass die Blendenelemente 152 sich beispielsweise bei einer Drehung derselben gegenseitig behindern.

Im Übrigen stimmt die in Fig. 25 dargestellte Ausführungsform der Blendenvorrichtung 150 hinsichtlich Aufbau und Funktion mit der in Fig. 24 dargestellten Ausführungsform überein, so dass auf deren vorstehende Beschreibung insoweit Bezug genommen wird.

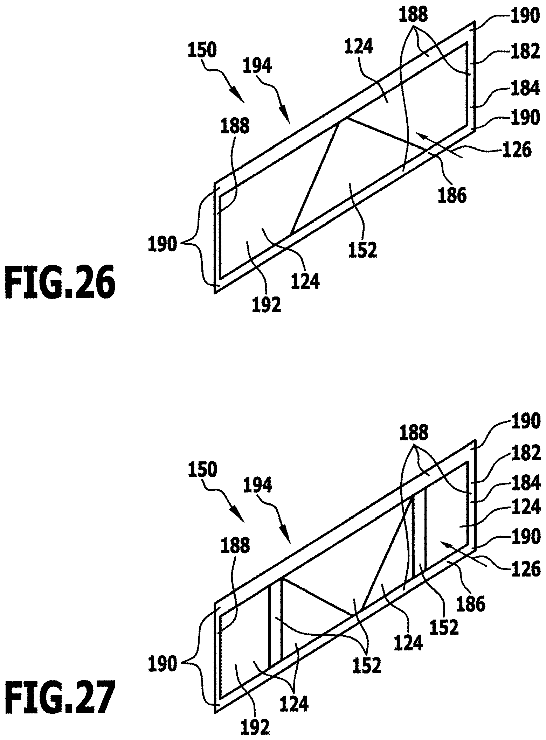

Eine in Fig. 26 dargestellte Ausführungsform einer Blendenvorrichtung 150 unterscheidet sich von der in Fig. 17 dargestellten Ausführungsform im Wesentlichen dadurch, dass das Blendenelement 152 im Wesentlichen dreiecksförmig ausgebildet ist.

Mittels eines solchen speziell geformten Blendenelements 152 können besondere Strömungsfelder in dem Innenraum 120 der Filtervorrichtung 112 erzeugt werden.

Im Übrigen stimmt die in Fig. 26 dargestellte Ausführungsform der Blendenvorrichtung 150 hinsichtlich Aufbau und Funktion mit der in Fig. 17 dargestellten Ausführungsform überein, so dass auf deren vorstehende Beschreibung insoweit Bezug genommen wird.

Eine in Fig. 27 dargestellte Ausführungsform einer Blendenvorrichtung 150 unterscheidet sich von der in Fig. 26 dargestellten Ausführungsform im Wesentlichen dadurch, dass zusätzlich zu dem dreiecksförmigen Blendenelement 152, welches bei der in Fig. 27 dargestellten Ausführungsform bezüglich einer horizontalen Achse spiegelverkehrt ausgerichtet ist, zwei schmale, vertikal ausgerichtete Blendenelemente 152 vorgesehen sind.

Mittels der insgesamt drei Blendenelemente 152 können insbesondere zwei dreieckige Einlassöffnungen 124 und zwei rechteckige Einlassöffnungen 124 gebildet werden.

Im Übrigen stimmt die in Fig. 27 dargestellte Ausführungsform der Blendenvorrichtung 150 hinsichtlich Aufbau und Funktion mit der in Fig. 26 dargestellten Ausführungsform überein, so dass auf deren vorstehende Beschreibung insoweit Bezug genommen wird.

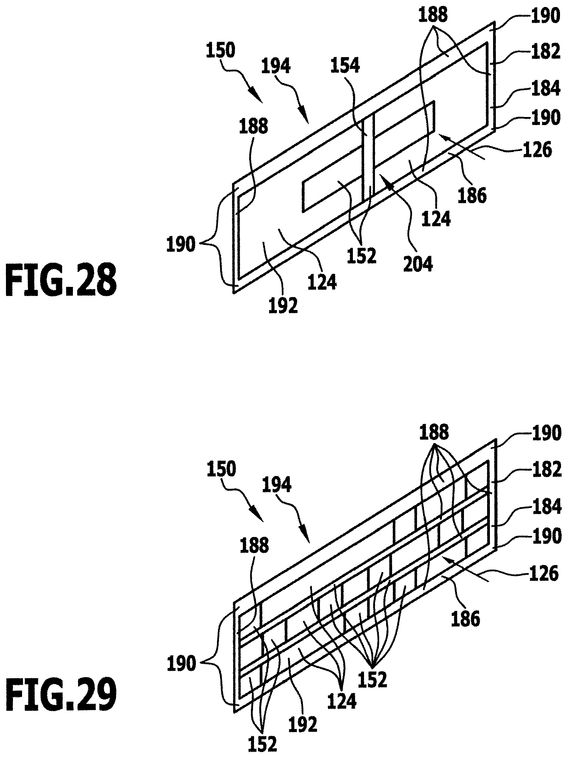

Eine in Fig. 28 dargestellte Ausführungsform einer Blendenvorrichtung 150 unterscheidet sich von der in Fig. 17 dargestellten Ausführungsform im Wesentlichen dadurch, dass das einen Steg 154 bildende Blendenelement 152 mit einem weiteren Blendenelement 152 versehen ist.

Das weitere Blendenelement 152 erstreckt sich zu beiden Seiten ausgehend von dem den Steg 154 bildenden Blendenelement 152 in im Wesentlichen horizontaler Richtung.

Das weitere Blendenelement 152 grenzt vorzugsweise nicht unmittelbar an eine der Aufnahmeleisten 188 des Aufnahmeelements 182 an.

Mittels der Blendenelemente 152 der in Fig. 28 dargestellten Ausführungsform der Blendenvorrichtung 150 ist eine kreuzförmige Struktur 204 gebildet, welche jedoch nur an zwei Stellen mit dem Aufnahmeelement 182 verbunden ist.

Mittels der kreuzförmigen Struktur 204 sind bei der in Fig. 28 dargestellten Ausführungsform der Blendenvorrichtung 150 somit lediglich zwei Einlassöffnungen 124 gebildet, nämlich zwei im Wesentlichen C-förmige Einlassöffnungen 124.

Im Übrigen stimmt die in Fig. 28 dargestellte Ausführungsform der Blendenvorrichtung 150 hinsichtlich Aufbau und Funktion mit der in Fig. 17 dargestellten Ausführungsform überein, so dass auf deren vorstehende Beschreibung insoweit Bezug genommen wird.

Eine in Fig. 29 dargestellte, nicht erfindungsgemäße Ausführungsform einer Blendenvorrichtung 150 unterscheidet sich von der in Fig. 17 dargestellten Ausführungsform im Wesentlichen dadurch, dass zwei im Wesentlichen horizontale Blendenelemente 152 oder zwei zwischen den horizontalen Aufnahmeleisten 188 verlaufende und ebenfalls parallel hierzu und parallel zueinander angeordnete weitere Aufnahmeleisten 188 vorgesehen sind.

Zusätzlich sind bei der in Fig. 29 dargestellten Ausführungsform der Blendenvorrichtung 150 mehrere, Stege 154 bildende Blendenelemente 152 vorgesehen.

Beispielsweise sind elf (zusätzliche) Blendenelemente 152 vorgesehen.

Die Blendenelemente 152 sind dabei in einem unregelmäßigen Muster verteilt angeordnet. Hierdurch kann gezielt eine asymmetrische Einströmung des Rohgasstroms in den Innenraum 120 erzeugt werden.

Im Übrigen stimmt die in Fig. 29 dargestellte Ausführungsform der Blendenvorrichtung 150 hinsichtlich Aufbau und Funktion mit der in Fig. 17 dargestellten Ausführungsform überein, so dass auf deren vorstehende Beschreibung insoweit Bezug genommen wird.

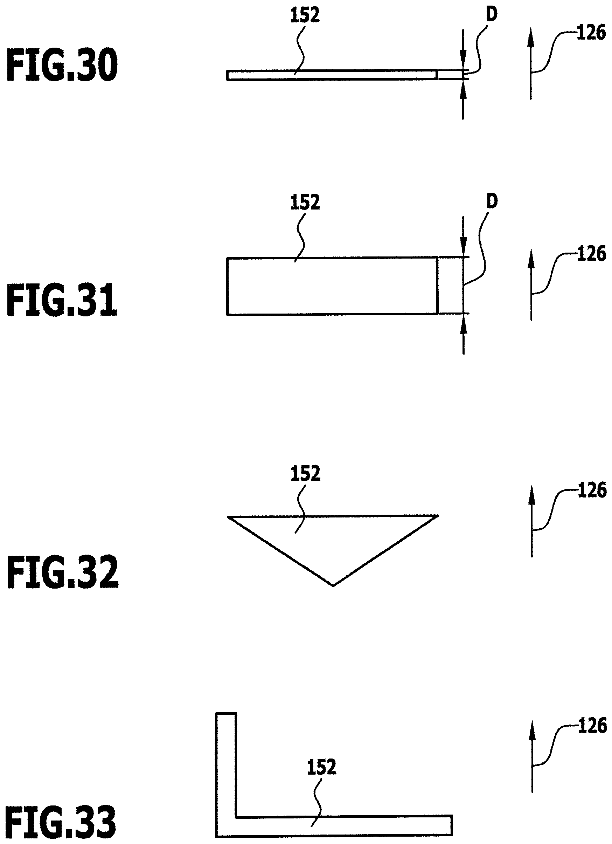

In den Fig. 30 bis 39 sind verschiedene Ausführungsformen von Blendenelementen 152 dargestellt, welche insbesondere anstelle oder zusätzlich zu den bislang beschriebenen Blendenelementen 152 vorgesehen sein können.

Das in Fig. 30 dargestellte Blendenelement 152 ist ein im Wesentlichen plattenförmiges Blendenelement 152, welches im Wesentlichen den vorangehend beschriebenen und abgebildeten Blendenelementen 152 entspricht.

Die in Fig. 31 dargestellte Ausführungsform eines Blendenelements 152 unterscheidet sich von der in Fig. 30 dargestellten Ausführungsform dadurch, dass das Blendenelement 152 eine größere Dicke D aufweist.

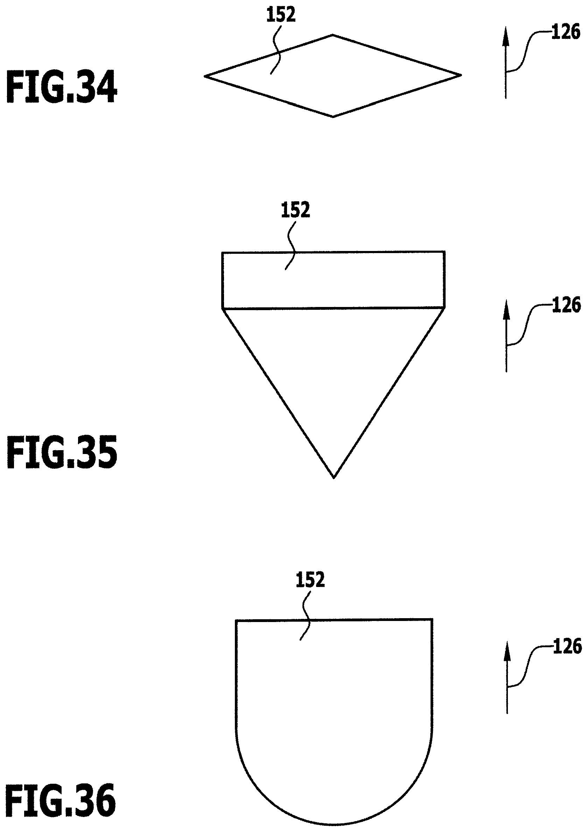

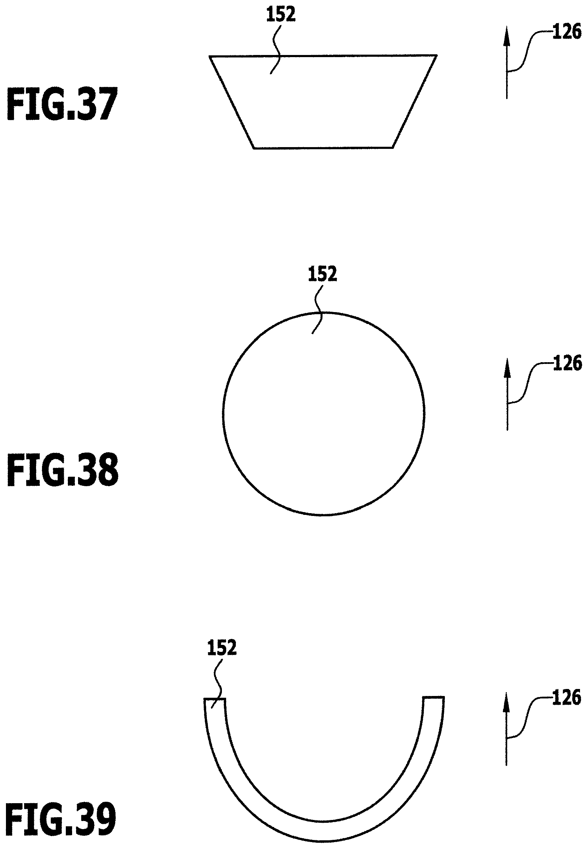

Bei weiteren Ausführungsformen der Blendenelemente 152 kann anstelle eines rechteckigen Querschnitts (Fig. 30 und 31). Beispielsweise ein dreiecksförmiger Querschnitt (Fig. 32), ein L-förmiger Querschnitt (Fig. 33), ein rautenförmiger Querschnitt (Fig. 34), ein trapezförmiger Querschnitt (Fig. 37), ein runder Querschnitt (Fig. 38), ein halbkreisförmiger Querschnitt (Fig. 39) oder ein komplexerer Querschnitt vorgesehen sein. Beispielsweise kann eine Kombination aus verschiedenen Querschnittsformen, insbesondere eine Kombination aus einem rechteckigen und einem dreiecksförmigen Querschnitt (Fig. 35) oder eine Kombination aus einem halbkreisförmigen und einem rechteckigen Querschnitt (Fig. 36), vorgesehen sein.

Insbesondere bei keilförmigen Blendenelementen 152 kann eine vorteilhafte Umströmung mit Rohgas ermöglicht werden. Insbesondere kann eine unerwünschte Verschmutzung mit Lack-Overspray reduziert werden.

Ferner können bei geeigneter Formgebung der Blendenelemente 152 die Blendenabschnitte 160 bei vorzugsweise gleichbleibendem Strömungseffekt zur Reduktion der Strömungsgeschwindigkeit des Rohgases verkleinert werden.

Das Material mindestens eines Blendenelements 152 kann fluidundurchlässig sein. Es kann jedoch auch vorgesehen sein, dass das Material fluiddurchlässig ist. Insbesondere kann mindestens ein Blendenelement 152 als ein Lochblech ausgebildet sein.

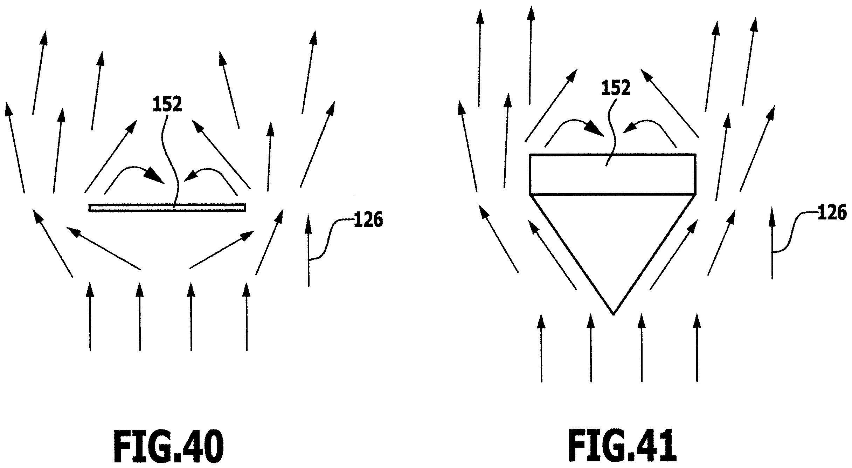

Ein Vergleich der Umströmung der verschiedenen Blendenelemente 152 ist in den Fig. 40 und 41 anhand der Blendenelemente 152 gemäß den Fig. 30 und 35 dargestellt. Aus diesem Vergleich geht hervor, dass durch geeignete Formgebung des Blendenelements der Rohgasstrom einfacher und somit (druck-)verlustfreier an dem Blendenelement 152 vorbeiführbar ist (siehe Fig. 41).

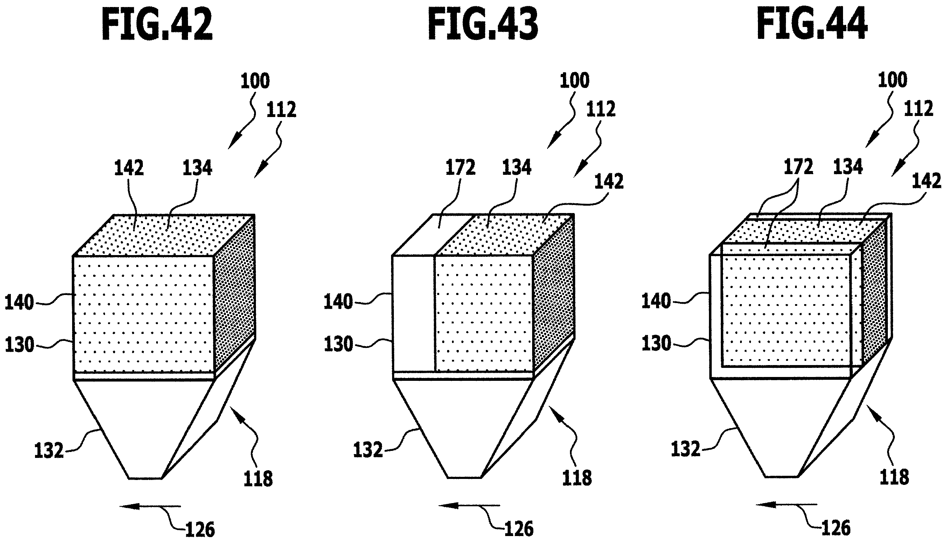

Eine in Fig. 42 dargestellte sechste Ausführungsform einer Filtervorrichtung 112 entspricht im Wesentlichen der in Fig. 3 dargestellten ersten Ausführungsform.

Bei dieser Ausführungsform ist der quaderförmige Abschnitt 130 des Innenraums 120 der Filtervorrichtung 112 im Wesentlichen vollständig mit dem mindestens einen Filterelement 134 gefüllt.

Das mindestens eine Filterelement 134 erstreckt sich somit bei dieser Ausführungsform bis zu sämtlichen Seitenwandungen 140 und bis zu der Deckenwandung 142.

Bei dieser Ausführungsform der Filtervorrichtung 112 kann eine besonders große Filterfläche (Filteroberfläche) zum Abtrennen zum Lack-Overspray aus dem Rohgasstrom genutzt werden.

Eine in Fig. 43 dargestellte siebte Ausführungsform einer Filtervorrichtung 112 unterscheidet sich von der in Fig. 42 dargestellten sechsten Ausführungsform im Wesentlichen dadurch, dass ähnlich der in Fig. 10 dargestellten fünften Ausführungsform ein Zuführkanal 172 vorgesehen ist.

Der Zuführkanal 172 ist dabei von einer dem Einlassabschnitt 118 gegenüberliegenden Seitenwandung 140, zwei im Wesentlichen parallel zur Einströmrichtung 126 verlaufenden Seitenwandungen 140 und der Deckenwandung 142 der Einhausung 128 der Filtervorrichtung 112 sowie von dem mindestens einen Filterelement 134 begrenzt.

Mittels des Zuführkanals 172 kann dem mindestens einen Filterelement 134 großflächig und zuverlässig Rohgas sowie Hilfsmaterial zugeführt werden.

Im Übrigen stimmt die in Fig. 43 dargestellte siebte Ausführungsform der Filtervorrichtung 112 hinsichtlich Aufbau und Funktion mit der in Fig. 42 dargestellten sechsten Ausführungsform überein, so dass auf deren vorstehende Beschreibung insoweit Bezug genommen wird.

Eine in Fig. 44 dargestellte achte Ausführungsform einer Filtervorrichtung 112 unterscheidet sich von der in Fig. 43 dargestellten siebten Ausführungsform im Wesentlichen dadurch, dass zwei Zuführkanäle 172 vorgesehen sind, welche bezüglich der Einströmrichtung 126 des Rohgasstroms seitlich benachbart zu dem mindestens einen Filterelement 134 angeordnet sind.

Die Zuführkanäle 172 sind dabei auf einander gegenüberliegenden Seiten des mindestens einen Filterelements 134 angeordnet und jeweils durch eine parallel zur Einströmrichtung 126 ausgerichtete Seitenwandung 140, durch die dem Einlassabschnitt 118 gegenüberliegende Seitenwandung 140, durch diejenige Seitenwandung 140, in welcher der Einlassabschnitt 118 angeordnet ist, durch die Deckenwandung 142 und durch das mindestens eine Filterelement 134 begrenzt.

Im Übrigen stimmt die in Fig. 44 dargestellte achte Ausführungsform der Filtervorrichtung 112 hinsichtlich Aufbau und Funktion mit der in Fig. 43 dargestellten siebten Ausführungsform überein, so dass auf deren vorstehende Beschreibung insoweit Bezug genommen wird.

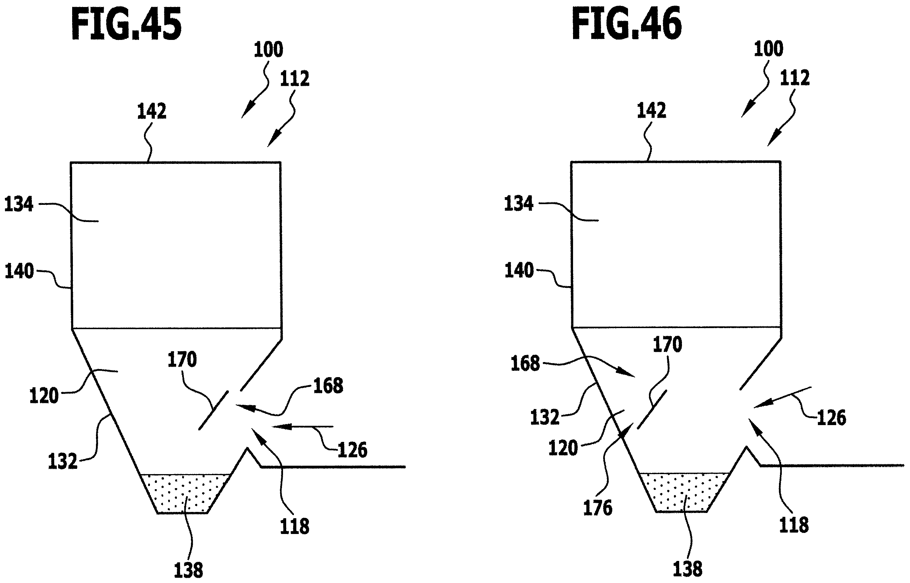

Eine in Fig. 45 dargestellte, für sich genommen nicht erfindungsgemäße, neunte Ausführungsform einer Filtervorrichtung 112 unterscheidet sich von der in Fig. 3 dargestellten ersten Ausführungsform im Wesentlichen dadurch, dass die Filtervorrichtung 112 eine Strömungsführung 168 umfasst, welche ein Strömungselement 170 umfasst.

Das Strömungselement 170 ist bezüglich der Einströmrichtung 126 des Rohgasstroms stromabwärts des Einlassabschnitts 118 angeordnet.

Mittels des Strömungselements 170 kann der in den Innenraum 120 strömende Rohgasstrom gezielt in den Aufnahmebehälter 138 geleitet werden.

Im Übrigen stimmt die in Fig. 45 dargestellte neunte Ausführungsform der Filtervorrichtung 112 hinsichtlich Aufbau und Funktion mit der in Fig. 3 dargestellten ersten Ausführungsform überein, so dass auf deren vorstehende Beschreibung insoweit Bezug genommen wird.

Eine in Fig. 46 dargestellte, für sich genommen nicht erfindungsgemäße, zehnte Ausführungsform einer Filtervorrichtung 112 unterscheidet sich von der in Fig. 45 dargestellten neunten Ausführungsform im Wesentlichen dadurch, dass das Strömungselement 170 auf einer dem Einlassabschnitt 118 gegenüberliegenden Seite 176 des Innenraums 120, insbesondere des trichterförmigen Abschnitts 132, angeordnet ist.

Auch mittels eines solchen Strömungselements 170 kann die Strömung in dem Innenraum 120 optimiert werden.

Im Übrigen stimmt die in Fig. 46 dargestellte zehnte Ausführungsform der Filtervorrichtung 112 hinsichtlich Aufbau und Funktion mit der in Fig. 45 dargestellten neunten Ausführungsform überein, so dass auf deren vorstehende Beschreibung insoweit Bezug genommen wird.

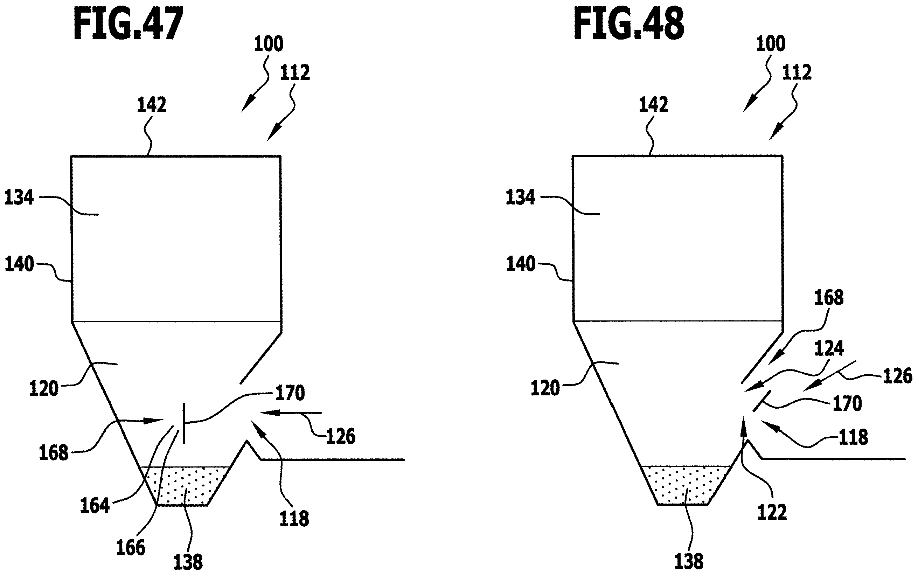

Eine in Fig. 47 dargestellte, für sich genommen nicht erfindungsgemäße, elfte Ausführungsform einer Filtervorrichtung 112 unterscheidet sich von der in Fig. 45 dargestellten neunten Ausführungsform im Wesentlichen dadurch, dass das Strömungselement 170 im Wesentlichen vertikal ausgerichtet ist.

Das Strömungselement 170 ist somit zumindest näherungsweise senkrecht zur Einströmrichtung 126 ausgerichtet.

Mittels des Strömungselements 170 können somit innerhalb des Innenraums 120 beispielsweise gezielt Rückstrombereiche 166 oder Querstrombereiche 164 erzeugt werden, um eine gewünschte Strömung in dem Innenraum 120 zu ermöglichen.

Im Übrigen stimmt die in Fig. 47 dargestellte elfte Ausführungsform einer Filtervorrichtung 112 hinsichtlich Aufbau und Funktion mit der in Fig. 45 dargestellten neunten Ausführungsform überein, so dass auf deren vorstehende Beschreibung insoweit Bezug genommen wird.

Eine in Fig. 48 dargestellte, für sich genommen nicht erfindungsgemäße, zwölfte Ausführungsform einer Filtervorrichtung 112 unterscheidet sich von der in Fig. 45 dargestellten neunten Ausführungsform im Wesentlichen dadurch, dass das Strömungselement 170 bezüglich der Einströmrichtung 126 des Rohgasstroms stromaufwärts der Einlassöffnung 124 in oder an dem Einlassabschnitt 118 angeordnet ist.

Mittels dieses Strömungselements 170 kann die Einströmrichtung 126 des Rohgasstroms gezielt beeinflusst werden.

Im Übrigen stimmt die in Fig. 48 dargestellte zwölfte Ausführungsform der Filtervorrichtung 112 hinsichtlich Aufbau und Funktion mit der in Fig. 45 dargestellten neunten Ausführungsform überein, so dass auf deren vorstehende Beschreibung insoweit Bezug genommen wird.

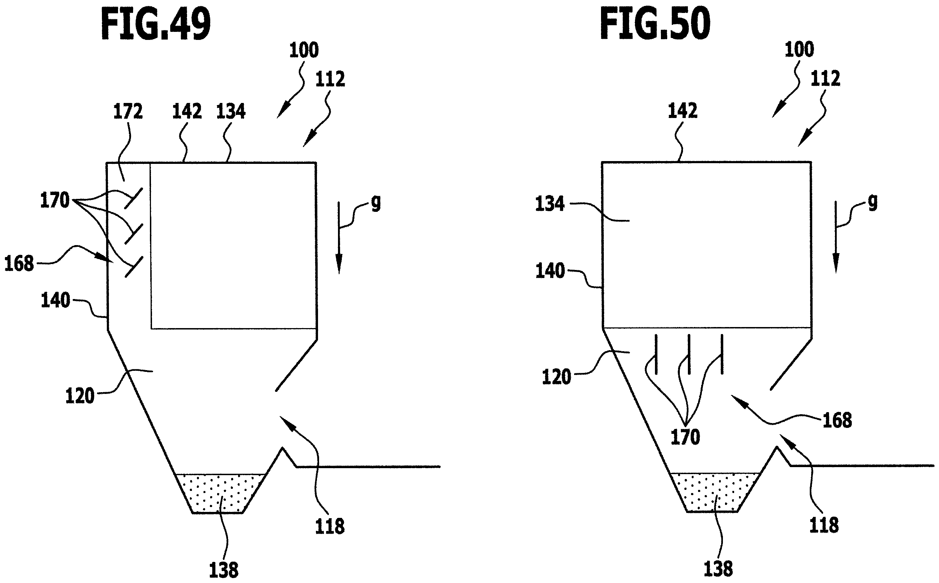

Eine in Fig. 49 dargestellte, für sich genommen nicht erfindungsgemäße, dreizehnte Ausführungsform einer Filtervorrichtung 112 unterscheidet sich von der in Fig. 10 dargestellten fünften Ausführungsform der Filtervorrichtung 112 im Wesentlichen dadurch, dass in dem Zuführkanal 172 mindestens ein Strömungselement 170, insbesondere drei Strömungselemente 170, einer Strömungsführung 168 angeordnet sind.

Die Strömungselemente 170 sind dabei so ausgerichtet, dass das durch den Zuführkanal 172 strömende Rohgas gezielt an einzelnen Stellen in Richtung des mindestens einen Filterelements 134 abgelenkt und somit gezielt dem mindestens einen Filterelement 134 zugeführt werden kann. Hierdurch kann eine gleichmäßige Beaufschlagung des mindestens einen Filterelements 134 mit Lack-Overspray und/oder Hilfsmaterial ermöglicht werden.

Im Übrigen stimmt die in Fig. 49 dargestellte dreizehnte Ausführungsform der Filtervorrichtung 112 hinsichtlich Aufbau und Funktion mit der in Fig. 10 dargestellten fünften Ausführungsform überein, so dass auf deren vorstehende Beschreibung insoweit Bezug genommen wird.

Eine in Fig. 50 dargestellte, für sich genommen nicht erfindungsgemäße, vierzehnte Ausführungsform einer Filtervorrichtung 112 unterscheidet sich von der in Fig. 47 dargestellten elften Ausführungsform im Wesentlichen dadurch, dass mehrere Strömungselemente 170 vorgesehen sind, welche oberhalb des Einlassabschnitts 118 angeordnet sind.

Die Strömungselemente 170 sind im Wesentlichen vertikal ausgerichtet und in einem Bereich des Innenraums 120 angeordnet, in welchem die Strömung im Wesentlichen entgegen der Schwerkraftrichtung g ausgerichtet ist.

Mittels der Strömungselemente 170 kann insbesondere diese Strömung entgegen der Schwerkraftrichtung g optimiert werden.

Auch hierdurch kann das mindestens eine Filterelement 134 gleichmäßig mit Lack-Overspray und/oder Hilfsmaterial beaufschlagt werden.

Im Übrigen stimmt die in Fig. 50 dargestellte vierzehnte Ausführungsform einer Filtervorrichtung 112 hinsichtlich Aufbau und Funktion mit der in Fig. 47 dargestellten elften Ausführungsform überein, so dass auf deren vorstehende Beschreibung insoweit Bezug genommen wird.

Durch die Verwendung einer Blendenvorrichtung 150, mindestens eines Zuführkanals 172 und/oder einer Strömungsführung 168 mit mindestens einem Strömungselement 170 kann die Strömung in einem Innenraum 120 der Filtervorrichtung 112 gezielt beeinflusst werden, um eine zuverlässige und gleichmäßige Beaufschlagung des mindestens einen Filterelements 134 mit Lack-Overspray und/oder Hilfsmaterial zu ermöglichen.

## Patentansprüche

1. Filtervorrichtung (112) zum Abtrennen von Partikeln, insbesondere von Partikeln eines Beschichtungsmaterials, aus einem Partikel enthaltenden Rohgasstrom,
wobei die Filtervorrichtung (112) eine regenerierbare Filtervorrichtung (112) ist, welche eine Einhausung (128) und mindestens ein Filterelement (134) umfasst, das in einem Filterbetrieb mit einer Sperrschicht und/oder einer Schutzschicht versehen ist, welche Filterhilfsmaterialumfasst,
wobei die Einhausung (128) einen Innenraum (120) der Filtervorrichtung (112) begrenzt,
wobei das mindestens eine Filterelement (134) in dem Innenraum (120) der Filtervorrichtung (112) angeordnet ist und
wobei der Rohgasstrom durch einen Einlassabschnitt (118) der Filtervorrichtung (112) in einer Einströmrichtung (126) dem Innenraum (120) der Filtervorrichtung (112) zuführbar ist,
**dadurch gekennzeichnet,**
**dass** die Filtervorrichtung (112) eine Blendenvorrichtung (150) umfasst, welche mindestens ein Blendenelement (152) umfasst,
wobei mittels des mindestens einen Blendenelements (152) der Einlassabschnitt (118) der Filtervorrichtung (112) abschnittsweise abdeckbar ist, so dass mindestens eine Einlassöffnung (124) und mindestens ein abgedeckter Blendenabschnitt (160) gebildet sind,
wobei das Blendenelement (152) einen Steg (154) bildet, welcher sich von einer bezüglich der Schwerkraftrichtung (g) oberen Seite (156) des Einlassabschnitts (118) bis zu einer bezüglich der Schwerkraftrichtung (g) unteren Seite (158) des Einlassabschnitts (118) erstreckt,
wobei das mindestens eine Blendenelement (152) beim Einströmen des Rohgasstroms in den Innenraum (120) der Filtervorrichtung (112) zweiseitig von dem Rohgasstrom umströmbar ist,
wobei mittels des mindestens einen Blendenelements (152) auf einer dem Innenraum (120) zugewandten Seite (162) des mindestens einen Blendenelements (152) ein Rückstrombereich (166) und/oder ein Querstrombereich (164) des Rohgasstroms erzeugbar ist, in welchem ein Transport von Rohgas und Hilfsmaterial aus einem Aufnahmebehälter (138) der Filtervorrichtung (112) entgegen der Schwerkraftrichtung (g) nach oben bis hin zu dem mindestens einen Filterelement (134) nicht von dem in den Innenraum (120) einströmenden Rohgasstrom behindert ist.

2. Filtervorrichtung (112) nach Anspruch 1, **dadurch gekennzeichnet, dass** sich der Einlassabschnitt (118) zumindest näherungsweise über eine gesamte Breite (B) oder eine gesamte Länge (L) der Einhausung (128) erstreckt.

3. Filtervorrichtung (112) nach einem der Ansprüche 1 oder 2, **dadurch gekennzeichnet, dass** die Blendenvorrichtung (150) mehrere Blendenelemente (152) umfasst, welche regelmäßig oder unregelmäßig verteilt angeordnet sind, so dass der Einlassabschnitt (118) mittels der Blendenelemente (152) in einem regelmäßigen oder unregelmäßigen Muster abschnittsweise abdeckbar ist.

4. Filtervorrichtung (112) nach einem der Ansprüche 1 bis 3, **dadurch gekennzeichnet, dass** mindestens ein Blendenelement (152) bewegbar an einem Aufnahmeelement (182) der Blendenvorrichtung (150) angeordnet ist.

5. Filtervorrichtung (112) nach einem der Ansprüche 1 bis 4, **dadurch gekennzeichnet, dass** mindestens ein Blendenelement (152) eine sich zumindest abschnittsweise längs der Einströmrichtung (126) des Rohgasstroms vergrößernde Querschnittsfläche aufweist.

6. Filtervorrichtung (112) nach einem der Ansprüche 1 bis 5, **dadurch gekennzeichnet, dass** mindestens ein Strömungselement (170) in einem dem Einlassabschnitt (118) zugeordneten Einlasskanal (122) der Filtervorrichtung (112) angeordnet ist.

7. Filtervorrichtung (112) nach einem der Ansprüche 1 bis 6, **dadurch gekennzeichnet, dass** mittels mindestens eines Filterelements (134) und einer Wandung (174) der Einhausung (128) ein Zuführkanal (172) gebildet ist, durch welchen der Rohgasstrom dem mindestens einen Filterelement (134) zuführbar ist,
wobei die Filtervorrichtung (112) vorzugsweise mindestens ein in dem Zuführkanal (172) angeordnetes Strömungselement (170) umfasst und/oder
wobei der Zuführkanal (172) vorzugsweise auf einer dem Einlassabschnitt (118) abgewandten Seite (176) des Innenraums (120) der Einhausung (128) angeordnet ist.

8. Filtervorrichtung (112) nach einem der Ansprüche 1 bis 7, **dadurch gekennzeichnet, dass** die Filtervorrichtung (112) eine Strömungsführung (168), welche eines oder mehrere Strömungselemente (170) umfasst, umfasst,
wobei das eine oder die mehreren Strömungselemente (170) wenigstens abschnittsweise von dem Rohgasstrom umströmbar angeordnet sind.

9. Lackieranlage (100), umfassend mindestens eine Filtervorrichtung (112) nach einem der Ansprüche 1 bis 8.

10. Verfahren zum Abtrennen von Partikeln, insbesondere von Partikeln eines Beschichtungsmaterials, aus einem Partikel enthaltenden Rohgasstrom, wobei der Rohgasstrom durch einen Einlassabschnitt (118) in einen Innenraum (120) einer Filtervorrichtung (112) strömt, wobei die Filtervorrichtung (112) eine regenerierbare Filtervorrichtung (112) ist, welche eine Einhausung (128) und mindestens ein Filterelement (134) umfasst, das in einem Filterbetrieb mit einer Sperrschicht und/oder einer Schutzschicht versehen ist, welche Filterhilfsmaterial umfasst,
wobei der Rohgasstrom durch ein Blendenelement (152) einer Blendenvorrichtung (150) in mehrere Teilströme geteilt wird und
wobei die Teilströme innerhalb des Innenraums (120) der Filtervorrichtung (112) wieder zusammengeführt werden,
wobei mittels des mindestens einen Blendenelements (152) der Einlassabschnitt (118) der Filtervorrichtung (112) abschnittsweise abgedeckt ist, so dass mindestens eine Einlassöffnung (124) und mindestens ein abgedeckter Blendenabschnitt (160) gebildet sind,
wobei das Blendenelement (152) einen Steg (154) bildet, welcher sich von einer bezüglich der Schwerkraftrichtung (g) oberen Seite (156) des Einlassabschnitts (118) bis zu einer bezüglich der Schwerkraftrichtung (g) unteren Seite (158) des Einlassabschnitts (118) erstreckt,
wobei das mindestens eine Blendenelement (152) beim Einströmen des Rohgasstroms in den Innenraum (120) der Filtervorrichtung (112) zweiseitig von dem Rohgasstrom umströmt wird,
wobei mittels des mindestens einen Blendenelements (152) auf einer dem Innenraum (120) zugewandten Seite (162) des mindestens einen Blendenelements (152) ein Rückstrombereich (166) und/oder ein Querstrombereich (164) des Rohgasstroms erzeugt wird, in welchem ein Transport von Rohgas und Hilfsmaterial aus einem Aufnahmebehälter (138) der Filtervorrichtung (112) entgegen der Schwerkraftrichtung (g) nach oben bis hin zu dem mindestens einen Filterelement (134) nicht von dem in den Innenraum (120) einströmenden Rohgasstrom behindert wird.

11. Verfahren nach Anspruch 10, **dadurch gekennzeichnet, dass** bezüglich einer Einströmrichtung (126) des Rohgasstroms in den Innenraum (120) der Filtervorrichtung (112) stromabwärts eines Strömungselements (170) der Strömungsführung (168) eine Rückströmung und/oder Querströmung von Rohgas entgegen der Einströmrichtung (126) und/oder quer zur Einströmrichtung (126) des Rohgasstroms erzeugt wird.

## Claims

1. A filtering device (112) for separating off particles, in particular particles of a coating material, from a stream of untreated gas that contains particles, wherein the filtering device (112) is a regenerable filtering device (112) that includes an enclosure (128) and at least one filter element (134) that, in a filter operation, is provided with a blocking layer and/or a protective layer including auxiliary filter material,
wherein the enclosure (128) delimits an interior space (120) of the filtering device (112),
wherein the at least one filter element (134) is arranged in the interior space (120) of the filtering device (112), and
wherein the stream of untreated gas is configured to be fed to the interior space (120) of the filtering device (112) in an intake direction (126), through an inlet portion (118) of the filtering device (112),
**characterised in that**
the filtering device (112) includes a screening device (150) that includes at least one screening element (152),
wherein, by means of the at least one screening element (152), the inlet portion (118) of the filtering device (112) is configured to be covered in certain regions, such that at least one inlet opening (124) and at least one covered screening portion (160) are formed,
wherein the screening element (152) forms a web (154) that extends from an upper side (156) of the inlet portion (118), relative to the direction of gravity (g), to a lower side (158) of the inlet portion (118), relative to the direction of gravity (g),
wherein the at least one screening element (152) is configured such that when the stream of untreated gas flows into the interior space (120) of the filtering device (112) the stream of untreated gas flows around the at least one screening element (152) on two sides,
wherein, by means of the at least one screening element (152), a backflow region (166) and/or a cross-flow region (164) of the stream of untreated gas is configured to be generated on a side (162) of the at least one screening element (152) facing the interior space (120), and in this backflow region (166) and/or cross-flow region (164) a transport of untreated gas and auxiliary material out of a receiving vessel (138) of the filtering device (112) upwards, in opposition to the direction of gravity (g), to the at least one filter element (134) is not hindered by the stream of untreated gas flowing into the interior space (120).

2. A filtering device (112) according to Claim 1, **characterised in that** the inlet portion (118) extends at least approximately over an entire width (B) or an entire length (L) of the enclosure (128).

3. A filtering device (112) according to one of Claims 1 or 2, **characterised in that** the screening device (150) includes a plurality of screening elements (152) that are arranged in a regular or irregular distribution such that the inlet portion (118) is configured to be covered in certain regions in a regular or irregular pattern by means of the screening elements (152).

4. A filtering device (112) according to one of Claims 1 to 3, **characterised in that** at least one screening element (152) is arranged to be movable on a receiving element (182) of the screening device (150).

5. A filtering device (112) according to one of Claims 1 to 4, **characterised in that** at least one screening element (152) has a cross-sectional surface that becomes larger, at least in certain regions, along the intake direction (126) of the stream of untreated gas.

6. A filtering device (112) according to one of Claims 1 to 5, **characterised in that** at least one flow element (170) is arranged in an intake duct (122) of the filtering device (112) that is associated with the inlet portion (118).

7. A filtering device (112) according to one of Claims 1 to 6, **characterised in that**, by means of at least one filter element (134) and a wall (174) of the enclosure (128), there is formed a feed duct (172) through which the stream of untreated gas is configured to be fed to the at least one filter element (134), wherein the filtering device (112) preferably includes at least one flow element (170) arranged in the feed duct (172), and/or
wherein the feed duct (172) is preferably arranged on a side (176) of the interior space (120) of the enclosure (128) remote from the inlet portion (118).

8. A filtering device (112) according to one of Claims 1 to 7, **characterised in that** the filtering device (112) includes a flow guide (168) that includes one or more flow elements (170),
wherein the one or more flow elements (170) are arranged such that the stream of untreated gas is configured to flow around them, at least in certain regions.

9. A painting system (100), including at least one filtering device (112) according to one of Claims 1 to 8.

10. A method for separating off particles, in particular particles of a coating material, from a stream of untreated gas that contains particles,
wherein the stream of untreated gas flows into an interior space (120) of a filtering device (112), through an inlet portion (118), wherein the filtering device (112) is a regenerable filtering device (112) that includes an enclosure (128) and at least one filter element (134) that, in a filter operation, is provided with a blocking layer and/or a protective layer including auxiliary filter material,
wherein the stream of untreated gas is divided into a plurality of sub-streams by a screening element (152) of a screening device (150), and
wherein the sub-streams are brought back together inside the interior space (120) of the filtering device (112),
wherein, by means of the at least one screening element (152), the inlet portion (118) of the filtering device (112) is covered in certain regions, such that at least one inlet opening (124) and at least one covered screening portion (160) are formed,
wherein the screening element (152) forms a web (154) that extends from an upper side (156) of the inlet portion (118), relative to the direction of gravity (g), to a lower side (158) of the inlet portion (118), relative to the direction of gravity (g),
wherein when the stream of untreated gas flows into the interior space (120) of the filtering device (112) the stream of untreated gas flows around the at least one screening element (152) on two sides,
wherein, by means of the at least one screening element (152), a backflow region (166) and/or a cross-flow region (164) of the stream of untreated gas is produced on a side (162) of the at least one screening element (152) facing the interior space (120), and in this backflow region (166) and/or cross-flow region (164) the transport of untreated gas and auxiliary material out of a receiving vessel (138) of the filtering device (112) upwards, in opposition to the direction of gravity (g), to the at least one filter element (134) is not hindered by the stream of untreated gas flowing into the interior space (120).

11. A method according to Claim 10, **characterised in that** downstream of a flow element (170) of the flow guide (168), as seen in an intake direction (126) of the stream of untreated gas into the interior space (120) of the filtering device (112), a backflow and/or a cross-flow of untreated gas is produced in opposition to the intake direction (126) and/or transverse to the intake direction (126) of the stream of untreated gas.

## Revendications

1. Dispositif de filtration (112) pour la séparation de particules, en particulier de particules d'un matériau de revêtement, d'un courant de gaz brut contenant des particules,
dans lequel le dispositif de filtration (112) est un dispositif de filtration régénérable (112), lequel comporte une enveloppe (128) et au moins un élément de filtration (134) qui est pourvu dans un mode de filtration d'une couche de blocage et/ou d'une couche de protection qui comporte du matériau auxiliaire de filtration, dans lequel l'enveloppe (128) délimite un espace intérieur (120) du dispositif de filtration (112),
dans lequel l'au moins un élément de filtration (134) est agencé dans l'espace intérieur (120) du dispositif de filtration (112) et
dans lequel le courant de gaz brut peut être amené par une section d'entrée (118) du dispositif de filtration (112) dans un sens d'afflux (126) à l'espace intérieur (120) du dispositif de filtration (112),
**caractérisé en ce**
**que** le dispositif de filtration (112) comporte un dispositif obturateur (150) qui comporte au moins un élément obturateur (152),
dans lequel la section d'entrée (118) du dispositif de filtration (112) peut être recouverte par section au moyen de l'au moins un élément obturateur (152) de sorte qu'au moins une ouverture d'entrée (124) et au moins une section obturateur (160) recouverte soient formées,
dans lequel l'élément obturateur (152) forme une nervure (154) qui s'étend depuis un côté supérieur (156) par rapport au sens de la force de gravité (g) de la section d'entrée (118) jusqu'à un côté inférieur (158) par rapport au sens de la force de gravité (g) de la section d'entrée (118),
dans lequel l'au moins un élément obturateur (152) peut être contourné lors de l'afflux du courant de gaz brut dans l'espace intérieur (120) du dispositif de filtration (112) des deux côtés par le courant de gaz brut,
dans lequel au moyen de l'au moins un élément obturateur (152) sur un côté (162) tourné vers l'espace intérieur (120) de l'au moins un élément obturateur (152) une zone de reflux (166) et/ou une zone de courant transversal (164) du courant de gaz brut peut être générée, dans laquelle un transport de gaz brut et de matériau auxiliaire depuis un récipient de réception (138) du dispositif de filtration (112) dans le sens inverse au sens de la force de gravité (g) vers le haut jusqu'à l'au moins un élément de filtration (134) n'est pas entravé par le courant de gaz brut affluant dans l'espace intérieur (120).

2. Dispositif de filtration (112) selon la revendication 1, **caractérisé en ce que** la section d'entrée (118) s'étend au moins approximativement sur une largeur entière (B) ou une longueur entière (L) de l'enveloppe (128).

3. Dispositif de filtration (112) selon l'une des revendications 1 ou 2, **caractérisé en ce que** le dispositif obturateur (150) comporte plusieurs éléments obturateurs (152) qui sont agencés répartis régulièrement ou irrégulièrement de sorte que la section d'entrée (118) puisse être recouverte par section au moyen des éléments obturateurs (152) dans un motif irrégulier ou irrégulier.

4. Dispositif de filtration (112) selon l'une des revendications 1 à 3, **caractérisé en ce que** l'au moins un élément obturateur (152) est agencé de manière mobile au niveau d'un élément de réception (182) du dispositif obturateur (150).

5. Dispositif de filtration (112) selon l'une des revendications 1 à 4, **caractérisé en ce qu'**au moins un élément obturateur (152) présente une aire de section s'agrandissant au moins par section le long du sens d'afflux (126) du courant de gaz brut.

6. Dispositif de filtration (112) selon l'une des revendications 1 à 5, **caractérisé en ce qu'**au moins un élément d'écoulement (170) est agencé dans un canal d'entrée (122) associé à la section d'entrée (118) du dispositif de filtration (112).

7. Dispositif de filtration (112) selon l'une des revendications 1 à 6, **caractérisé en ce qu'**au moyen d'au moins un élément de filtration (134) et d'une paroi (174) de l'enveloppe (128) un canal d'amenée (172) est formé, par lequel le courant de gaz brut peut être amené à l'au moins un élément de filtration (134),
dans lequel le dispositif de filtration (112) comporte de préférence au moins un élément d'écoulement (170) agencé dans le canal d'amenée (172) et/ou
dans lequel le canal d'amenée (172) est agencé de préférence sur un côté (176) éloigné de la section d'entrée (118) de l'espace intérieur (120) de l'enveloppe (128).

8. Dispositif de filtration (112) selon l'une des revendications 1 à 7, **caractérisé en ce que** le dispositif de filtration (112) comporte un guidage d'écoulement (168) qui comporte un ou plusieurs éléments d'écoulement (170),
dans lequel l'un ou les plusieurs éléments d'écoulement (170) sont agencés au moins par section de manière contournable par le courant de gaz brut.

9. Installation de peinture (100) comprenant au moins un dispositif de filtration (112) selon l'une des revendications 1 à 8.

10. Procédé de séparation de particules, en particulier de particules d'un matériau de revêtement, d'un courant de gaz brut contenant des particules,
dans lequel le courant de gaz brut s'écoule par une section d'entrée (118) dans un espace intérieur (120) d'un dispositif de filtration (112), dans lequel le dispositif de filtration (112) est un dispositif de filtration (112) régénérable, qui comporte une enveloppe (128) et au moins un élément de filtration (134) qui est pourvu dans un mode de filtration d'une couche de blocage et/ou d'une couche de protection qui comporte du matériau auxiliaire de filtration, dans lequel le courant de gaz brut est séparé par un élément obturateur (152) d'un dispositif obturateur (150) en plusieurs courants partiels et
dans lequel les courants partiels sont réunis de nouveau dans l'espace intérieur (120) du dispositif de filtration (112),
dans lequel au moyen de l'au moins un élément obturateur (152) la section d'entrée (118) du dispositif de filtration (112) est recouverte par section de sorte qu'au moins une ouverture d'entrée (124) et au moins une section d'obturateur recouverte (160) soient formées,
dans lequel l'élément obturateur (152) forme une nervure (154) qui s'étend d'un côté (156) supérieur par rapport au sens de la force de gravité (g) de la section d'entrée (118) jusqu'à un côté inférieur (158) par rapport au sens de la force de gravité (g) de la section d'entrée (118),
dans lequel l'au moins un élément obturateur (152) est contourné lors de l'afflux du courant de gaz brut dans l'espace intérieur (120) du dispositif de filtration (112) des deux côtés par le courant de gaz brut,
dans lequel au moyen de l'au moins un élément obturateur (152) sur un côté (162) tourné vers l'espace intérieur (120) de l'au moins un élément obturateur (152) une zone de reflux (166) et/ou une zone de courant transversal (164) du courant de gaz brut est générée, dans lequel un transport de gaz brut et de matériau auxiliaire à partir d'un récipient de réception (138) du dispositif de filtration (112) dans le sens inverse au sens de la force de gravité (g) vers le haut jusqu'à l'au moins un élément de filtration (134) n'est pas entravé par le courant de gaz brut affluant dans l'espace intérieur (120).

11. Procédé selon la revendication 10, **caractérisé en ce qu'**un reflux et/ou courant transversal de gaz brut dans le sens inverse au sens d'afflux (126) et/ou transversalement au sens d'afflux (126) du courant de gaz brut est généré par rapport au sens d'afflux (126) du courant de gaz brut dans l'espace intérieur (120) du dispositif de filtration (112) en aval d'un élément d'écoulement (170) du guidage d'écoulement (168).
